(19) Europäisches Patentamt / European Patent Office / Office européen des brevets

(11) **EP 4 316 654 A1**

(12) **EUROPEAN PATENT APPLICATION**
published in accordance with Art. 153(4) EPC

(43) Date of publication:
**07.02.2024 Bulletin 2024/06**

(21) Application number: **22779759.4**

(22) Date of filing: **01.03.2022**

(51) International Patent Classification (IPC):
**B01J 23/63** (2006.01)     **B01D 53/94** (2006.01)
**B01J 35/04** (2006.01)     **F01N 3/10** (2006.01)
**F01N 3/28** (2006.01)

(52) Cooperative Patent Classification (CPC):
**B01D 53/94; B01J 23/63; B01J 35/56; F01N 3/10; F01N 3/28;** Y02A 50/20

(86) International application number:
**PCT/JP2022/008674**

(87) International publication number:
**WO 2022/209534 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.03.2021   JP 2021058558
30.03.2021   JP 2021058531
19.11.2021   JP 2021188894

(71) Applicant: **Mitsui Mining & Smelting Co., Ltd.**
**Shinagawa-ku**
**Tokyo 141-8584 (JP)**

(72) Inventors:
• **MORITA, Itaru**
**Ageo-shi, Saitama 362-0025 (JP)**
• **TANAKA, Hiroki**
**Ageo-shi, Saitama 362-0025 (JP)**
• **NAGAO, Yuki**
**Ageo-shi, Saitama 362-0025 (JP)**
• **ENDO, Yoshinori**
**Ageo-shi, Saitama 362-0025 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **CATALYST COMPOSITION FOR EXHAUST GAS PURIFICATION AND CATALYST FOR EXHAUST GAS PURIFICATION**

(57)    An object of the present invention is to provide an exhaust gas purifying catalyst composition and an exhaust gas purifying catalyst, each of which has improved exhaust gas purification performance, and the present invention provides an exhaust gas purifying catalyst composition containing a Ce-based oxide particle, a Ce-Zr-based composite oxide particle, and a noble metal element, wherein the Ce-based oxide particle contains at least one type of additional element selected from Al, Mg, La, Pr, Y, and Nd, and wherein an amount of the at least one type of additional element in terms of oxide in the Ce-based oxide particle is 0.1% by mass or more and 20% by mass or less based on a mass of the Ce-based oxide particle.

EP 4 316 654 A1

**Description**

**FIELD OF THE INVENTION**

The present invention relates to an exhaust gas purifying catalyst composition and an exhaust gas purifying catalyst.

**BACKGROUND ART**

Exhaust gas emitted from an internal-combustion engine of an automobile, a motorcycle or the like contains harmful components, such as hydrocarbons (THC), carbon monoxide (CO) and nitrogen oxide (NOx). As an exhaust gas purifying catalyst that purifies and detoxifies these harmful components, a three-way catalyst having a catalytic activity to oxidize THC and convert it to water and carbon dioxide, to oxidize CO and convert it to carbon dioxide as well as to reduce NOx and convert it to nitrogen, has been used.

In an exhaust gas purifying catalyst such as a three-way catalyst, an Al-based oxide such as alumina ($Al_2O_3$), a Ce-Zr-based composite oxide, and the like are used as a carrier that supports a catalytically active component (e.g., a particle of a noble metal such as Pt, Pd, or Rh) (for example, Patent Documents 1 and 2). In the present specification, "Al-based oxide" means an oxide containing Al, wherein the amount of Al in terms of $Al_2O_3$ is 70% by mass or more based on the mass of the oxide, and "Ce-Zr-based composite oxide" means a composite oxide containing Ce and Zr, wherein the amount of Ce in terms of $CeO_2$ is 5% by mass or more and 90% by mass or less based on the mass of the composite oxide.

A Ce-Zr-based composite oxide is a material (OSC material) that has an oxygen storage capacity (OSC), which mitigates fluctuations in the oxygen concentration in the exhaust gas and expands the operating window of the catalyst. A Ce-based oxide such as cerium oxide ($CeO_2$) is also used as an OSC material (for example, Patent Document 2). However, since $CeO_2$ has a low oxygen storage capacity, $CeO_2$ is generally not used as a carrier for supporting a catalytically active component of a three-way catalyst. In the present specification, "Ce-based oxide" means an oxide containing Ce, wherein the amount of Ce in terms of $CeO_2$ is 80% by mass or more based on the mass of the oxide.

**CITATION LIST**

PATENT DOCUMENTS

Patent Document 1 Japanese Patent Laid-Open No. 2017-039069
Patent Document 2 Japanese Patent Laid-Open No. 2006-297372

**SUMMARY OF THE INVENTION**

A Ce-based oxide has high affinity to a catalytically active component (for example, a particle of a noble metal such as Pt, Pd, or Rh), but has low heat resistance. On the other hand, a Ce-Zr-based composite oxide has high heat resistance, but has relatively low affinity to a catalytically active component (for example, a particle of a noble metal such as Pt, Pd, or Rh). Therefore, by using a Ce-based oxide and a Ce-Zr-based composite oxide together as a carrier for supporting a catalytically active component, the weak point of one can be compensated for by the other. However, even if a Ce-based oxide and a Ce-Zr-based composite oxide are used in combination, the exhaust gas purification performance may decrease.

For example, when $CeO_2$ is used as a carrier for supporting a catalytically active component, the low heat resistance of $CeO_2$ leads to $CeO_2$ aggregation, disappearance of small pores of $CeO_2$ (that is, decrease in specific surface area), and the like. As a result, the catalytically active component is buried, and the exhaust gas purification performance may decrease. The $CeO_2$ aggregation and the decrease in specific surface area of $CeO_2$ tend to occur in a high-temperature environment, so the decrease in exhaust gas purification performance tends to occur after exposure to a high-temperature environment. In the present specification, "high temperature" means a temperature of, for example, 800°C or higher, and particularly 900°C or higher.

In addition, when $CeO_2$ is used as a carrier for supporting the catalytically active component, the exhaust gas purification performance may decrease due to the low oxygen storage capacity of $CeO_2$.

Therefore, it is an object of the present invention to provide an exhaust gas purifying catalyst composition and an exhaust gas purifying catalyst, each of which utilizes a Ce-based oxide and a Ce-Zr-based composite oxide, and has improved exhaust gas purification performance (particularly improved exhaust gas purification performance after exposure to a high-temperature environment.

The present inventors have found that, in an exhaust gas purifying catalyst composition and an exhaust gas purifying catalyst, each of which utilizes a Ce-based oxide and a Ce-Zr-based composite oxide, the exhaust gas purification performance (in particular, the exhaust gas purification performance after exposure to a high-temperature environment) is improved by adding at least one type of additional element selected from Al, Mg, La, Pr, Y, and Nd to the Ce-based oxide.

The present invention has been completed based on the findings described above, and includes the following inventions.

[1] An exhaust gas purifying catalyst composition comprising a Ce-based oxide particle, a Ce-Zr-based composite oxide particle, and a noble metal element,

wherein the Ce-based oxide particle contains at least one type of additional element selected from Al, Mg, La, Pr, Y, and Nd,

wherein an amount of Ce in terms of $CeO_2$ in the Ce-based oxide particle is 80% by mass or more based on a mass of the Ce-based oxide particle,

wherein an amount of the at least one type of additional element in terms of oxide in the Ce-based oxide particle is 0.1% by mass or more and 20% by mass or less based on the mass of the Ce-based oxide particle, and

wherein an amount of Ce in terms of $CeO_2$ in the Ce-Zr-based composite oxide particle is 5% by mass or more and 90% by mass or less based on a mass of the Ce-Zr-based composite oxide particle.

[2] An exhaust gas purifying catalyst including a substrate and a catalyst layer provided on the substrate, wherein the catalyst layer is composed of the exhaust gas purifying catalyst composition according to [1].

The present invention provides an exhaust gas purifying catalyst composition and an exhaust gas purifying catalyst, each of which utilizes a Ce-based oxide and a Ce-Zr-based composite oxide, and has improved exhaust gas purification performance (particularly improved exhaust gas purification performance after exposure to a high-temperature environment.

**BRIEF DESCRIPTION OF THE DRAWINGS**

FIG. 1 is a partial end view depicting the state where an exhaust gas purifying catalyst according to the first embodiment of the present invention is disposed in an exhaust gas path of an internal-combustion engine.
FIG. 2 is an end view taken along the line A-A in FIG. 1.
FIG. 3 is an enlarged view of the region denoted by the sign R in FIG. 2.
FIG. 4 is an end view taken along the line B-B in FIG. 1.
FIG. 5 is an end view (end view corresponding to FIG. 4) of an exhaust gas purifying catalyst according to the second embodiment of the present invention.

**DETAILED DESCRIPTION OF THE INVENTION**

« Exhaust Gas Purifying Catalyst Composition »

The exhaust gas purifying catalyst composition of the present invention will now be described.

< Ce-based oxide particle >

The exhaust gas purifying catalyst composition of the present invention contains a Ce-based oxide particle. In the present specification, unless otherwise specified, "Ce-based oxide particle" means a Ce-based oxide particle contained in the exhaust gas purifying catalyst composition of the present invention, which is distinguished from a Ce-based oxide particle used as a raw material for the exhaust purifying catalyst composition of the present invention (hereinafter referred to as "Ce-based oxide particle as a raw material").

The Ce-based oxide particle is composed of a Ce-based oxide. The amount of Ce in terms of $CeO_2$ in the Ce-based oxide particle is preferably 80% by mass or more, more preferably 85% by mass or more, and further preferably 90% by mass or more, based on the mass of the Ce-based oxide particle. This improves the affinity of the Ce-based oxide particle to a catalytically active component, and suppresses the occurrence of sintering between a catalytically active component and another catalytically active component, each of which is supported on the Ce-based oxide particle. Therefore, the degree of dispersion of the catalytically active component is improved, and the exhaust gas purification performance of the exhaust gas purifying catalyst composition is improved. Such effects are pronounced in an exhaust gas purifying catalyst composition after it has been exposed to a high-temperature environment. This is because sintering between a catalytically active component and another catalytically active component, each of which is supported on the Ce-based oxide particle, tends to occur after exposure to a high-temperature environment. The upper limit is a value obtained by subtracting the amount of the additional element in terms of oxide from 100% by mass.

The amount of Ce in terms of $CeO_2$ in the Ce-based oxide particle can be measured by analyzing a sample obtained from the exhaust gas purifying catalyst composition of the present invention by energy dispersive X-ray spectroscopy (EDS (also referred to as EDX)) to obtain an element mapping, and performing EDS elemental analysis on a designated particle in the obtained element mapping. Specifically, the amount of a specified element in terms of oxide in the designated particle can be measured by qualitatively identifying (color-coding) a Ce-based oxide particle, a Ce-Zr-based composite oxide particle and the other particle(s) (e.g., an Al-based oxide particle) by elemental mapping and performing composition analysis (elemental analysis) on the designated particle.

From the viewpoint of further improving the affinity of the Ce-based oxide particle to a catalytically active component and more effectively suppressing the occurrence of sintering between a catalytically active component and another catalytically active component, each of which is supported on the Ce-based oxide particle, the amount of Zr in terms of $ZrO_2$ in the Ce-based oxide particle is preferably less than 10% by mass, more preferably 5% by mass or less, further preferably 3% by mass or less, and further preferably 1% by mass or less, based on the mass of the Ce-based oxide particle. The lower limit is zero. The amount of Zr in terms of $ZrO_2$ in the Ce-based oxide particle is smaller than the amount of Zr in terms of $ZrO_2$ in a Ce-Zr-based composite oxide particle, and in this respect, the Ce-based oxide particle is distinguished from a Ce-Zr-based composite oxide particle. The method for measuring the amount of Zr in terms of $ZrO_2$ in the Ce-based oxide particle is the same as the method for measuring the amount of Ce in terms of $CeO_2$ in the Ce-based oxide particle.

The Ce-based oxide particle contains at least one type of additional element selected from Al, Mg, La, Pr, Y, and Nd. That is, the Ce-based oxide particle is a composite oxide containing Ce and at least one type of additional element selected from Al, Mg, La, Pr, Y, and Nd. Here, "additional element" means an element other than Ce and O.

The additional element may form a solid solution phase together with Ce and O, or may form a single phase that is a crystal phase or an amorphous phase (for example, an oxide phase of the additional element), or may form both a solid solution phase and a single phase.

When the Ce-based oxide particle contains at least one type of additional element selected from Al and Mg, the heat resistance of the Ce-based oxide particle is improved, and the decrease in specific surface area of the Ce-based oxide particle and the burial of a catalytically active component in the Ce-based oxide particle caused thereby are suppressed. Therefore, the specific surface area of the exhaust gas purifying catalyst composition is improved, the degree of dispersion of the catalytically active component is improved, and the exhaust gas purification performance of the exhaust gas purifying catalyst composition is improved. Such effects are pronounced in an exhaust gas purifying catalyst composition after it has been exposed to a high-temperature environment. This is because the decrease in specific surface area of the Ce-based oxide particle, and the burial of the catalytically active component in the Ce-based oxide particle caused thereby tend to occur after exposure to a high-temperature environment.

When the Ce-based oxide particle contains at least one type of additional element selected from La, Pr, Y, and Nd, the oxygen storage capacity (i.e., the capacity to store oxygen when the oxygen concentration in the exhaust gas is high and release oxygen when the oxygen concentration in the exhaust gas is low) of the Ce-based oxide particle after supporting a noble metal element is improved. Therefore, fluctuations in the oxygen concentration in the exhaust gas are mitigated, the operating window of a catalytically active component is expanded, and the exhaust gas purification performance of the exhaust gas purifying catalyst composition is improved.

From the viewpoint of more effectively exerting the above-described action of the additional element, the amount of the additional element in terms of oxide in the Ce-based oxide particle is preferably 0.1% by mass or more and 20% by mass or less based on the mass of the Ce-based oxide particle. The meaning of "amount of the additional element in terms of oxide" is, in the case of Al, the amount of Al in terms of $Al_2O_3$, in the case of Mg, the amount of Mg in terms of MgO, in the case of La, the amount of La in terms of $La_2O_3$, in the case of Pr, the amount of Pr in terms of PreOn, in the case of Y, the amount of Y in terms of $Y_2O_3$, and in the case of Nd, the amount of Nd in terms of $Nd_2O_3$. Further, "amount of the additional element in terms of oxide " means, when the Ce-based oxide particle contains one type of additional element, the amount of the one type of additional element in terms of oxide, and when the Ce-based oxide particle contains two or more types of additional elements, the total of the amounts of the two or more types of additional elements in terms of oxide.

From the viewpoint of improving the heat resistance of the Ce-based oxide particle, the total of the amount of Ce in terms of $CeO_2$ and the amount of the additional element in terms of oxide in the Ce-based oxide particle is preferably 90% by mass or more, more preferably 95% by mass or more, and further preferably 98% by mass or more, based on the mass of the Ce-based oxide particle. The upper limit is 100% by mass.

Hereinafter, the additional element selected from Al and Mg will be referred to as "first additional element", and the additional element selected from La, Pr, Y, and Nd will be referred to as "second additional element".

In one embodiment, the Ce-based oxide particle contains at least one type of first additional element and does not contain a second additional element. In this embodiment, from the viewpoint of more effectively exerting the above-described action of the first additional element, the amount of the first additional element in terms of oxide in the Ce-based oxide particle is preferably 0.1% by mass or more and 20% by mass or less, more preferably 0.1% by mass or more and 15% by mass or less, further preferably 0.1% by mass or more and 12% by mass or less, and further preferably 0.1% by mass or more and 10% by mass or less, based on the mass of the Ce-based oxide particle. The "amount of the first additional element in terms of oxide" means, when the Ce-based oxide particle contains one type of first additional element, the amount of the one type of first additional element in terms of oxide, and when the Ce-based oxide particle contains two types of first additional elements, the total of the amounts of the two types of first additional elements in terms of oxide.

In another embodiment, the Ce-based oxide particle contains at least one type of second additional element and does not contain a first additional element. In this embodiment, from the viewpoint of more effectively exerting the above-described action of the second additional element, the amount of the second additional element in terms of oxide in the Ce-based oxide particle is preferably 0.1% by mass or more and 20% by mass or less, more preferably 0.1% by mass or more and 15% by mass or less, further preferably 0.1% by mass or more and 12% by mass or less, and further preferably 0.1% by mass or more and 10% by mass or less, based on the mass of the Ce-based oxide particle. The "amount of the second additional element in terms of oxide" means, when the Ce-based oxide particle contains one type of second additional element, the amount of the one type of second additional element in terms of oxide, and when the Ce-based oxide particle contains two or more types of second additional elements, the total of the amounts of the two or more types of second additional elements in terms of oxide.

In yet another embodiment, the Ce-based oxide particle contains at least one type of first additional element and at least one type of second additional element. In this embodiment, from the viewpoint of more effectively exerting the above-described actions of the first and second additional elements, the amount of the first additional element in terms of oxide in the Ce-based oxide particle is preferably 0.1% by mass or more and 19.9% by mass or less, more preferably 0.1% by mass or more and 14.9% by mass or less, further preferably 0.1% by mass or more and 11.9% by mass or less, and further preferably 0.1% by mass or more and 9.9% by mass or less, based on the mass of the Ce-based oxide particle, the amount of the second additional element in terms of oxide in the Ce-based oxide particle is preferably 0.1% by mass or more and 19.9% by mass or less, more preferably 0.1% by mass or more and 14.9% by mass or less, further preferably 0.1% by mass or more and 11.9% by mass or less, and further preferably 0.1% by mass or more and 9.9% by mass or less, based on the mass of the Ce-based oxide particle, and the total of the amounts of the first and second additional elements in terms of oxide in the Ce-based oxide particle is preferably 0.2% by mass or more and 20% by mass or less, more preferably 0.5% by mass or more and 15% by mass or less, further preferably 1% by mass or more and 12% by mass or less, and further preferably 2% by mass or more and 10% by mass or less, based on the mass of the Ce-based oxide particle. The meaning of each of "amount of the first additional element in terms of oxide" and "amount of the second additional element in terms of oxide" is the same as above.

The crystallite size of $CeO_2$ in the Ce-based oxide particle is preferably 7 nm or more, more preferably 10 nm or more, further preferably 20 nm or more, and further preferably 30 nm or more. This suppresses Ce-based oxide particle aggregation, disappearance of small pores of the Ce-based oxide particle (that is, decrease in specific surface area), and burial of a catalytically active component in the Ce-based oxide particle caused by the aggregation and the disappearance. Therefore, the degree of dispersion of the catalytically active component is improved, and the exhaust gas purification performance of the exhaust gas purifying catalyst composition is improved. Such effects are pronounced in an exhaust gas purifying catalyst composition after it has been exposed to a high-temperature environment. This is because the Ce-based oxide particle aggregation, the decrease in specific surface area of the Ce-based oxide particle, and the burial of the catalytically active component in the Ce-based oxide particle caused by the aggregation and the decrease tend to occur after exposure to a high-temperature environment. The upper limit of the crystallite size of $CeO_2$ in the Ce-based oxide particle is, for example, 200 nm, preferably 100 nm, and more preferably 55 nm. Each of these upper limits may be combined with any of the above-described lower limits.

The method for measuring the crystallite size of $CeO_2$ in the Ce-based oxide particle is as follows. X-ray diffraction (XRD) is performed using a powder sample obtained from the exhaust gas purifying catalyst composition of the present invention and a commercially available X-ray diffractometer. In the obtained XRD pattern, among the peaks derived from $CeO_2$, the peak present at $2\theta = 55$ to $58°$ and the peak present at $2\theta = 46$ to $49°$ are identified, and the Scherrer equation is applied to the identified peaks to measure the crystallite size. The specific measuring method is as described in the Examples. The crystallite size determined from the peak present at $2\theta = 55$ to $58°$ and the crystallite size determined from the peak present at $2\theta = 46$ to $49°$ are compared, and the larger crystallite size is selected as the crystallite size of $CeO_2$ in the Ce-based oxide particle. When, in the obtained XRD pattern, it is impossible to identify one of the peak present at $2\theta = 55$ to $58°$ and the peak present at $2\theta = 46$ to $49°$ among the peaks derived from $CeO_2$ due to a peak(s) derived from a component(s) other than $CeO_2$, the crystallite size obtained from the peak that can be identified is taken as the crystallite size of $CeO_2$ in the Ce-based oxide particle.

The crystallite size of $CeO_2$ in the Ce-based oxide particle may be adjusted, for example, by adjusting firing conditions when producing the Ce-based oxide particle, or may be adjusted by providing a crystallization step (e.g., exposing to a hydrothermal condition) in the production stage of the Ce-based oxide particle.

From the viewpoint of more effectively exerting the above-described effects of the Ce-based oxide particle, the amount of the Ce-based oxide particle in the exhaust gas purifying catalyst composition of the present invention is preferably 1.0% by mass or more, more preferably 2.0% by mass or more, further preferably 3.0% by mass or more, further preferably 5.0% by mass or more, and further preferably 10% by mass or more, based on the mass of the exhaust gas purifying catalyst composition of the present invention. In addition, from the viewpoint of further improving the specific surface area of the exhaust gas purifying catalyst composition (in particular, the specific surface area after exposure to a high-temperature environment) by relatively increasing the amount of a component(s) other than the Ce-based oxide particle (e.g., the amount of a Ce-Zr-based composite oxide particle, the amount of the other particle(s), etc.), the amount of the Ce-based oxide particle in the exhaust gas purifying catalyst composition of the present invention is preferably 50% by mass or less, more preferably 30% by mass or less, further preferably 25% by mass or less, further preferably 20% by mass or less, and further preferably 15% by mass or less, based on the mass of the exhaust gas purifying catalyst composition of the present invention. Each of these upper limits may be combined with any of the above-described lower limits.

The method for measuring the amount of the Ce-based oxide particle in the exhaust gas purifying catalyst composition of the present invention is performed according to the following procedures (A) to (D).

(A) Elemental analysis using inductively coupled plasma atomic emission spectroscopy (ICP), X-ray fluorescence spectroscopy (XRF), scanning electron microscopy-energy dispersive X-Ray spectroscopy (SEM-EDX) or the like is performed on a sample obtained from the exhaust gas purifying catalyst composition to identify the types of constituent elements of the entire sample, and to obtain the content of each identified element in terms of oxide.

(B) Elemental mapping by SEM observation and SEM-EDX is performed on a sample obtained from the exhaust gas purifying catalyst composition, and the types of particles contained in the sample (including a Ce-based oxide particle, a Ce-Zr-based composite oxide particle, and the other particle(s) (e.g., an Al-based oxide particle)) are identified.

(C) For each type of particle, elemental analysis by SEM-EDX is performed on a plurality of randomly selected particles (for example, 50 particles) to identify the types of constituent elements of the particles and to obtain the content of each identified element in terms of oxide. For each type of particle, the average value of the content of each element is taken as the content of each element.

(D) The content of each type of particle in the sample is calculated by drawing up and solving equations representing the relationship among the content of each element in the sample, the content of each element in each type of particle, and the content of each type of particle in the sample.

For example, when the Ce source, the Zr source, and the Al source in the exhaust gas purifying catalyst composition of the present invention consist of the three types, that is, a Ce-based oxide particle, a Ce-Zr-based composite oxide particle, and an Al-based oxide particle, the amount of the Ce-based oxide particle is determined as follows.

First, on a sample obtained from the exhaust gas purifying catalyst composition of the present invention, SEM-EDX analysis is performed on five randomly selected fields of view (each field of view containing 20 or more particles) to identify the types of constituent elements of the entire sample and to obtain the content (average value) of each identified element in terms of oxide.

Next, elemental mapping by SEM observation and SEM-EDX is performed on a sample obtained from the exhaust gas purifying catalyst composition, and the types of particles contained in the sample (including the Ce-based oxide particle, the Ce-Zr-based composite oxide particle, and the Al-based oxide particle) are identified.

Next, for each type of particle, elemental analysis by SEM-EDX is performed on fifty randomly selected particles to identify the types of constituent elements of the particles and to obtain the content (average value) of each identified element in terms of oxide.

Through the above procedure, the following contents are obtained.

- Content of Ce in terms of $CeO_2$ in the entire sample (hereinafter referred to as "$P_T$")
- Content of Ce in terms of $CeO_2$ in the Ce-based oxide particle (hereinafter referred to as "$P_1$")
- Content of Ce in terms of $CeO_2$ in the Ce-Zr-based composite oxide particle (hereinafter referred to as "$P_2$")
- Content of Ce in terms of $CeO_2$ in the Al-based oxide particle (hereinafter referred to as "$P_3$")
- Content of Zr in terms of $ZrO_2$ in the entire sample (hereinafter referred to as "$Q_T$")

- Content of Zr in terms of $ZrO_2$ in the Ce-based oxide particle (hereinafter referred to as "$Q_1$")
- Content of Zr in terms of $ZrO_2$ in the Ce-Zr-based composite oxide particle (hereinafter referred to as "$Q_2$")
- Content of Zr in terms of $ZrO_2$ in the Al-based oxide particle (hereinafter referred to as "$Q_3$")

- Content of Al in terms of $Al_2O_3$ in the entire sample (hereinafter referred to as "$R_T$")
- Content of Al in terms of $Al_2O_3$ in the Ce-based oxide particle (hereinafter referred to as "$R_1$")
- Content of Al in terms of $Al_2O_3$ in the Ce-Zr-based composite oxide particle (hereinafter referred to as "$R_2$")
- Content of Al in terms of $Al_2O_3$ in the Al-based oxide particle (hereinafter referred to as "$R_3$")

Next, the content of each type of particle in the sample is calculated by drawing up and solving equations representing the relationship among the content of each element in the sample, the content of each element in each type of particle, and the content of each type of particle in the sample.

Specifically, assuming that the content (on a mass basis) of the Ce-based oxide particle, the content (on a mass basis) of the Ce-Zr-based composite oxide particle, and the content (on a mass basis) of the other particle in the exhaust gas purifying catalyst composition of the present invention are X, Y and Z, respectively, the following Equations (1) to (3) are true.

$$P_T = X \times P_1 + Y \times P_2 + Z \times P_3 \qquad (1)$$

$$Q_T = X \times Q_1 + Y \times Q_2 + Z \times Q_3 \qquad (2)$$

$$R_T = X \times R_1 + Y \times R_2 + Z \times R_3 \qquad (3)$$

From the above equations (1) to (3), X, Y and Z are obtained, and from X, the amount of the Ce-based oxide particle in the exhaust gas purifying catalyst composition of the present invention is obtained.

If the average particle size of the Ce-based oxide particle is too small, a solid phase reaction will proceed at the interface between the Ce-based oxide particle and a Ce-Zr-based composite oxide particle, and the Ce-based oxide particle will be no longer present as a particle. The solid phase reaction at the interface between the Ce-based oxide particle and a Ce-Zr-based composite oxide particle tends to occur after exposure to a high-temperature environment. On the other hand, if the average particle size of the Ce-based oxide particle is too large, the dispersibility of the Ce-based oxide particle will decrease, and the contact property of the Ce-based oxide particle with a catalytically active component will deteriorate. Therefore, from the viewpoint of more effectively exerting the above effects of the Ce-based oxide particle, the average particle size of the Ce-based oxide particle is preferably 0.10 μm or more and 15 μm or less, more preferably 0.50 μm or more and 12 μm or less, further preferably 1.0 μm or more and 10 μm or less, and further preferably 2.0 μm or more and 7.0 μm or less.

A method of measuring the average particle size of the Ce-based oxide particle is as follows. A sample obtained from the exhaust gas purifying catalyst composition of the present invention is observed using a scanning electron microscope, and unidirectional particle diameters (Feret diameters) of 100 Ce-based oxide particles arbitrarily selected from the visual field are measured to define an average value as the average particle size of the Ce-based oxide particle. When producing the exhaust gas purifying catalyst composition of the present invention, the average particle size of a Ce-based composite oxide particle as a raw material is maintained, and thus the average particle size of the Ce-based composite oxide particle is usually the same as the average particle size of a Ce-based composite oxide particle as a raw material.

The average particle size of the Ce-based oxide particle may be adjusted, for example, by using a known pulverization method such as a ball mill, or by using a granulation method such as a spray drying method when producing the Ce-based oxide particle.

The Ce-based oxide particle is used as a carrier of a catalytically active component. From the viewpoint of improving the supportability of the catalytically active component, the Ce-based oxide particle is preferably porous. The Ce-based oxide particle is distinguished from ceria used as a binder (hereinafter referred to as "ceria binder"). The ceria binder is derived from a ceria sol used as a material for the catalyst composition or from a water-soluble cerium salt (e.g., cerium nitrate or cerium nitrate) used as a material for the catalyst composition.

The Ce-based oxide particle may contain one or more types of metal elements other than Ce, Al, Mg, La, Pr, Y, and Nd. Examples of such a metal element other than Ce, Al, Mg, La, Pr, Y, and Nd include rare earth elements such as Sc, Sm, Eu, Gd, Tb, Dy, Ho, Er, Tm, Yb, and Lu, transition metal elements such as Fe, Mn, Ni, and Zr, and the like. Such a metal element other than Ce, Al, Mg, La, Pr, Y, and Nd may form a solid solution phase together with Ce and O, or may form a single phase, which is a crystal phase or an amorphous phase (for example, an oxide phase of such a metal element), or may form both a solid solution phase and a single phase.

< Ce-Zr-based Composite Oxide Particle >

The exhaust gas purifying catalyst composition of the present invention contains a Ce-Zr-based composite oxide particle. In the present specification, unless otherwise specified, "Ce-Zr-based composite oxide particle" means a Ce-Zr-based composite oxide particle contained in the exhaust gas purifying catalyst composition of the present invention, which is distinguished from a Ce-Zr-based composite oxide particle used as a raw material for the exhaust purifying catalyst composition of the present invention (hereinafter referred to as "Ce-Zr-based composite oxide particle as a raw material").

The Ce-Zr-based composite oxide particle has an oxygen storage capacity (i.e., an ability to absorb oxygen when the oxygen concentration in exhaust gas is high and release oxygen when the oxygen concentration in exhaust gas is low), and mitigate fluctuations in the oxygen concentration in exhaust gas and expand the operating window of a catalytically active component. Therefore, the exhaust gas purification performance of the exhaust gas purifying catalyst composition is improved.

The Ce-Zr-based composite oxide particle is composed of a Ce-Zr-based composite oxide. From the viewpoint of improving the oxygen storage capacity of the Ce-Zr-based composite oxide particle, the amount of Ce in terms of $CeO_2$ in the Ce-Zr-based composite oxide particle is preferably 5% by mass or more and 90% by mass or less, more preferably 5% by mass or more and 70% by mass or less, further preferably 7% by mass or more and 60% by mass or less, and further preferably 10% by mass or more and 50% by mass or less, based on the mass of the Ce-Zr-based composite oxide particle. The method for measuring the amount of Ce in terms of $CeO_2$ in the Ce-Zr-based composite oxide particle is the same as the method for measuring the amount of Ce in terms of $CeO_2$ in the Ce-based oxide particle.

From the viewpoint of further improving the heat resistance of the Ce-Zr-based composite oxide particle and further improving the exhaust gas purification performance (particularly, the exhaust gas purification performance after being exposed to a high temperature environment) of the exhaust gas purifying catalyst composition, the amount of Zr in terms of $ZrO_2$ in the Ce-Zr-based composite oxide particle is preferably 10% by mass or more and 95% by mass or less, more preferably 20% by mass or more and 95% by mass or less, further preferably 40% by mass or more and 95% by mass or less, and further preferably 50% by mass or more and 90% by mass or less, based on the mass of the Ce-Zr-based composite oxide particle. The method for measuring the amount of Zr in terms of $ZrO_2$ in the Ce-Zr-based composite oxide particle is the same as the method for measuring the amount of Ce in terms of $CeO_2$ in the Ce-based oxide particle.

From the viewpoint of further improving the oxygen storage capacity and heat resistance of the Ce-Zr-based composite oxide particle and further improving the exhaust gas purification performance (particularly, the exhaust gas purification performance after being exposed to a high temperature environment) of the exhaust gas purifying catalyst composition, the total of the amount of Ce in terms of $CeO_2$ and the amount of Zr in terms of $ZrO_2$ in the Ce-Zr-based composite oxide particle is preferably 70% by mass or more, more preferably 75% by mass or more, further preferably 80% by mass or more, and further preferably 85% by mass or more, based on the mass of the Ce-Zr-based composite oxide particle. The upper limit is 100% by mass.

From the viewpoint of more effectively exerting the above-described effects of the Ce-Zr-based composite oxide particle, the amount of the Ce-Zr-based composite oxide particle in the exhaust gas purifying catalyst composition of the present invention is preferably 5% by mass or more, more preferably 15% by mass or more, and further preferably 30% by mass or more, based on the mass of the exhaust gas purifying catalyst composition of the present invention. In addition, from the viewpoint of more effectively exerting the above-described effects of the Ce-based oxide particle by relatively increasing the amount of the Ce-based oxide particle, the amount of the Ce-Zr-based composite oxide particle in the exhaust gas purifying catalyst composition of the present invention is preferably 98.99% by mass or less, more preferably 80% by mass or less, and further preferably 70% by mass or less, based on the mass of the exhaust gas purifying catalyst composition of the present invention. Each of these upper limits may be combined with any of the above-described lower limits. The method for measuring the amount of the Ce-Zr-based composite oxide particle in the exhaust gas purifying catalyst composition of the present invention is the same as the method for measuring the amount of the Ce-based oxide particle in the exhaust gas purifying catalyst composition of the present invention.

From the viewpoint of balancing the above-described effects of the Ce-based oxide particle and the above-described effects of the Ce-Zr-based composite oxide particle, and further improving the exhaust gas purification performance of the exhaust gas purifying catalyst composition (in particular, the exhaust gas purification performance after exposure to a high-temperature environment), the mass ratio of the amount of the Ce-Zr-based composite oxide particle to the amount of the Ce-based oxide particle in the exhaust gas purifying catalyst composition of the present invention is preferably 0.5 or more and 70 or less, more preferably 1.0 or more and 25 or less, and further preferably 1.5 or more and 15 or less.

The average particle size of the Ce-Zr-based composite oxide particle is preferably 0.1 $\mu$m or more and 15 $\mu$m or less, more preferably 0.5 $\mu$m or more and 12 $\mu$m or less, and further preferably 1 $\mu$m or more and 10 $\mu$m or less. The method for measuring the average particle size of the Ce-Zr-based composite oxide particle is the same as the method for measuring the average particle size of the Ce-based oxide particle. The average particle size of the Ce-Zr-based composite oxide particle can be adjusted in the same manner as the average particle size of the Ce-based oxide particle. When producing the exhaust gas purifying catalyst composition of the present invention, the average particle size of a Ce-Zr-based composite oxide particle as a raw material is maintained, and thus the average particle size of the Ce-Zr-based composite oxide particle is usually the same as the average particle size of a Ce-Zr-based composite oxide particle as a raw material.

The Ce-Zr-based composite oxide particle is used as a carrier of a catalytically active component. From the viewpoint of improving the supportability of the catalytically active component, the Ce-Zr-based composite oxide particle is preferably porous.

In the Ce-Zr-based composite oxide particle, Ce, Zr, and O preferably form a solid solution phase. In addition to the solid solution phase, Ce, Zr, and O may form a single phase ($CeO_2$ phase and/or $ZrO_2$ phase), which is a crystalline phase or an amorphous phase.

The Ce-Zr-based composite oxide particle may contain one or more types of metal elements other than Ce and Zr. Examples of such a metal element other than Ce and Zr include rare earth elements other than Ce and the like. Examples of such a rare earth element other than Ce include Y, Pr, Sc, La, Nd, Sm, Eu, Gd, Tb, Dy, Ho, Er, Tm, Yb, and Lu. Such a metal element other than Ce and Zr may form a solid solution phase together with Ce, Zr and O, or may form a single phase, which is a crystal phase or an amorphous phase, or may form both a solid solution phase and a single phase.

< Noble Metal Element >

The exhaust gas purifying catalyst composition of the present invention contains at least one type of noble metal element. Such a noble metal element can be selected, for example, from Au, Ag, Pt, Pd, Rh, Ir, Ru, Os, and the like, and is preferably selected from Rh and Pt.

The noble metal element contained in the exhaust gas purifying catalyst composition of the present invention is in a form capable of functioning as a catalytic active component, for example, in the form of a metal, an alloy containing the noble metal element, a compound containing the noble metal element (for example, an oxide of the noble metal element), or the like.

From the viewpoint of balancing the exhaust gas purification performance and the cost, the amount of the noble metal element in the exhaust gas purifying catalyst composition of the present invention is preferably 0.010% by mass or more and 20% by mass or less, more preferably 0.050% by mass or more and 10% by mass or less, and further preferably 0.10% by mass or more and 5.0% by mass or less, based on the mass of the exhaust gas purifying catalyst composition of the present invention. In the present specification, "amount of the noble metal element" means, when the catalyst composition contains one type of noble metal element, the amount of the one type of noble metal element in terms of metal, and when the catalyst composition contains two or more types of noble metal elements, the total of the amounts of the two or more types of noble metal elements in terms of metal.

The amount of the noble metal element in the exhaust gas purifying catalyst composition of the present invention can be measured by analyzing a sample obtained from the exhaust gas purifying catalyst composition of the present invention by EDS or WDS (wavelength dispersive X-ray fluorescence spectrometer) to obtain an element mapping, and performing EDS elemental analysis on a designated particle in the obtained element mapping.

The noble metal element preferably includes a noble metal element supported on the Ce-based oxide particle and a noble metal element supported on the Ce-Zr-based composite oxide particle. At a low to medium temperature, the noble metal element supported on the Ce-based oxide particle tends to exhibit an exhaust gas purification performance, and at a high temperature, the noble metal element supported on the Ce-Zr-based composite oxide particle tends to exhibit an exhaust gas purification performance. Therefore, by using the noble metal element supported on the Ce-based oxide particle and the noble metal element supported on the Ce-Zr-based composite oxide particle, an excellent exhaust gas purification performance is exhibited over a wide temperature range. In particular, the exhaust gas purifying catalyst composition of the present invention exhibits an excellent exhaust gas purification performance at a low to medium temperature after exposure to a high-temperature environment. As used herein, the term "low to medium temperature" means, for example, a temperature of from 50°C to 400°C, and preferably, from 100°C to 350°C. The term "supported" refers to a state in which a catalytically active component such as a noble metal is physically or chemically absorbed or retained on the outer surface or on the inner surface of the pores of the Ce-based oxide particle or the Ce-Zr-based composite oxide particle. For example, a sample obtained from the exhaust gas purifying catalyst composition of the present invention is analyzed by SEM-EDX and when a catalytically active component and a Ce-based oxide particle are present in the same region, it can be determined that the catalytically active component is supported on the Ce-based oxide particle, and when a catalytically active component and a Ce-Zr-based composite oxide particle are present in the same region, it can be determined that the catalytically active component is supported on the Ce-Zr-based composite oxide particle. The amount of the noble metal element supported on the Ce-based oxide particle is preferably 0.05% by mass or more, and more preferably 0.10% by mass or more based on the mass of the Ce-based oxide particle. The upper limit is, for example, 20% by mass. The amount of the noble metal element supported on the Ce-Zr-based composite oxide particle is preferably 0.05% by mass or more, and more preferably 0.10% by mass or more based on the mass of the Ce-Zr-based composite oxide particle. The upper limit is, for example, 20% by mass.

< Other Components >

The exhaust gas purifying catalyst composition of the present invention may contain one or more types of inorganic oxide particles other than the Ce-based oxide particle and the Ce-Zr-based composite oxide particle (hereinafter referred to as "the other particle(s)"). In the present specification, unless otherwise specified, "the other particle(s)" means the other particle(s) contained in the exhaust gas purifying catalyst composition of the present invention, which is/are distinguished from the other particle(s) used as a raw material for the exhaust purifying catalyst composition of the present invention (hereinafter referred to as "the other particle(s) as a raw material").

The other particle(s) is/are composed of an oxide containing a metal element(s) other than Ce and Zr. Examples of the other particle(s) include an Al-based oxide particle, a zirconia particle, a silica particle, a titania particle, and the like.

The Al-based oxide particle generally has higher heat resistance than the Ce-based oxide particle and the Ce-Zr-based composite oxide particle. Therefore, the specific surface area of the exhaust gas purifying catalyst composition (in particular, the specific surface area after exposure to a high-temperature environment) is improved, and the exhaust gas purification performance of the exhaust gas purifying catalyst composition (in particular, the exhaust gas purification performance after exposure to a high-temperature environment) is improved.

The Al-based oxide particle is composed of an Al-based oxide. The Al-based oxide particle may or may not contain an element(s) other than Al and O.

Such an element(s) other than Al and O can be selected from B, Si, rare earth elements (e.g., Y, Ce, La, Nd, Pr, Sm, Gd, etc.), Zr, Cr, and alkaline earth metal elements (e.g., Mg, Ca, Sr, Ba, etc.), but it is preferable to select such an element(s) from Ce, La, Sr, Ba, and the like, from the viewpoint of improving the heat resistance of the Al-based oxide.

Examples of the Al-based oxide include alumina (an oxide consisting of Al and O), an oxide obtained by modifying the surface of alumina with an element(s) other than Al and O, and an oxide obtained by dissolving an element(s) other than Al and O in alumina. Specific examples of such an Al-based oxide containing an element(s) other than Al and O include alumina-silica, alumina-silicate, alumina-zirconia, alumina-chromia, alumina-ceria, alumina-lanthana, and the like.

In the Al-based oxide particle, an element(s) other than Al and O may form a solid solution phase together with Al and O, or may form a single phase that is a crystal phase or an amorphous phase (for example, an oxide phase of an element other than Al and O), or may form both a solid solution phase and a single phase.

When the Al-based oxide particle contain an element(s) other than Al and O, the amount of Al in terms of $Al_2O_3$ in the Al-based oxide particle is preferably 70% by mass or more and 99.9% by mass or less, more preferably 80% by mass or more and 99.5% by mass or less, and further preferably 90% by mass or more and 99% by mass or less, based on the mass of the Al-based oxide particle, from the viewpoint of improving the heat resistance.

From the viewpoint of improving the specific surface area (in particular, the specific surface area after exposure to a high-temperature environment) and securing a sufficient amount of a co-catalyst (e.g., the Ce-based oxide particle, the Ce-Zr-based composite oxide particle, etc.), the amount of the Al-based oxide particle in the exhaust gas purifying catalyst composition of the present invention is preferably 10% by mass or more and 90% by mass or less, more preferably 15% by mass or more and 70% by mass or less, and further preferably 20% by mass or more and 60% by mass or less, based on the mass of the exhaust gas purifying catalyst composition of the present invention. The method for measuring the amount of the Al-based oxide particle in the exhaust gas purifying catalyst composition of the present invention is the same as the method for measuring the amount of the Ce-based oxide particle in the exhaust gas purifying catalyst composition of the present invention.

From the viewpoint of improving the specific surface area (particularly, the specific surface area after exposure to a high-temperature environment) and securing a sufficient amount of the co-catalyst, the mass ratio of the amount of the Al-based oxide particle to the amount of the Ce-based oxide particle in the exhaust gas purifying catalyst composition of the present invention is preferably 0.1 or more and 10 or less, more preferably 0.2 or more and 5 or less, and further preferably 0.3 or more and 3 or less.

From the viewpoint of achieving both the heat resistance of the Al-based oxide particle and the coatability of the Al-based oxide particle to the substrate, the average particle size of the Al-based oxide particle is preferably 1 $\mu$m or more and 50 $\mu$m or less, more preferably 2 $\mu$m or more and 30 $\mu$m or less, and further preferably 4 $\mu$m or more and 20 $\mu$m or less. The method for measuring the average particle size of the Al-based oxide particle is the same as the method for measuring the average particle size of the Ce-based oxide particle. The average particle size of the Al-based oxide particle can be adjusted in the same manner as the average particle size of the Ce-based oxide particle. When producing the exhaust gas purifying catalyst composition of the present invention, the average particle size of an Al-based oxide particle as a raw material is maintained, and thus the average particle size of the Al-based oxide particle is usually the same as the average particle size of an Al-based oxide particle as a raw material.

The other particle(s) is/are used as a carrier of a catalytically active component. From the viewpoint of improving the supportability of the catalytically active component, the other particle(s) is/are preferably porous. The Al-based oxide particle is distinguished from alumina used as a binder (hereinafter referred to as "alumina binder"). The alumina binder is derived from an alumina sol used as a material for the catalyst composition.

When the exhaust gas purifying catalyst composition of the present invention contains the other particle(s), the noble metal element may include a noble metal element supported on the other particle(s). The meaning of "supported" is the same as described above. At a high temperature, the exhaust gas purification performance of the noble metal element supported on the other particle(s) tends to be exhibited. Therefore, by using the noble metal element supported on the Ce-based oxide particle, the noble metal element supported on the Ce-Zr-based composite oxide particle, and the noble metal element supported on the other particle(s), the exhaust gas purification performance is improved over a wide temperature range. The amount of the noble metal element supported on the other particle(s) is preferably 0.05% by mass or more, and more preferably 0.10% by mass or more, based on the mass of the other particle(s). The upper limit is, for example, 20% by mass.

The exhaust gas purifying catalyst composition of the present invention may contain a stabilizer, a binder, and the like. Examples of the binder include an inorganic oxide binder such as an alumina sol, a zirconia sol, a titania sol, and a silica sol. Examples of the stabilizer include a nitrate, carbonate, oxide, or sulfate of an alkaline earth metal element (e.g., Sr, Ba, etc.).

< Form of Exhaust Gas Purifying Catalyst Composition >

The exhaust gas purifying catalyst composition of the present invention is in the form of, for example, a powder, a molded body, or a layer.

< Method of Producing Exhaust Gas Purifying Catalyst Composition >

The exhaust gas purifying catalyst composition of the present invention can be produced, for example, by mixing a noble metal salt-containing solution, a Ce-based oxide particle as a raw material, a Ce-Zr-based composite oxide particle as a raw material, and optionally other components (e.g., the other particle(s) as a raw material, a binder, a stabilizer, etc.), followed by drying and firing. The fired product may be pulverized as necessary. The noble metal salt may be, for example, a nitrate, an ammine complex salt, a chloride or the like. The solvent contained in the noble metal salt-containing solution is, for example, water (such as ion exchanged water). The noble metal salt-containing solution may contain an organic solvent such as alcohol. The drying temperature is, for example, 50°C or higher and 150°C or lower. The drying time is, for example, 1 hour or more and 3 hours or less. The firing temperature is, for example, 300°C or higher and 700°C or lower. The firing time is, for example, 1 hour or more and 3 hours or less. The firing can be carried out, for example, in an air atmosphere.

From the viewpoint of adjusting the crystallite size of $CeO_2$ in the Ce-based oxide particle to a desired range, it is preferable to apply a heat load on a Ce-based oxide particle as a raw material to adjust the crystallite size of $CeO_2$ in the Ce-based oxide particle as a raw material. The heat load can be applied, for example, by firing at 1000°C for 1 hour in an air atmosphere. The crystallite size of $CeO_2$ in the Ce-based oxide particle as a raw material is preferably 7 nm or more, more preferably 10 nm or more, further preferably 20 nm or more, and further preferably 30 nm or more. The upper limit of the crystallite size of $CeO_2$ in the Ce-based oxide particle as a raw material is, for example, 200 nm, preferably 100 nm, and more preferably 55 nm. Each of these upper limits may be combined with any of the above-described lower limits. The method for measuring the crystallite size of $CeO_2$ in the Ce-based oxide particle as a raw material is the same as the method for measuring the crystallite size of $CeO_2$ in the Ce-based oxide particle, except that the measurement is performed using the Ce-based oxide particle as a raw material.

« Exhaust Gas Purifying Catalyst »

The exhaust gas purifying catalyst according to the present invention will now be described.

The exhaust gas purifying catalyst of the present invention includes a substrate and a catalyst layer of the present invention provided on the substrate. The exhaust gas purifying catalyst of the present invention may have a catalyst layer other than the catalyst layer of the present invention at one or more positions selected from a lower side, an upper side, a downstream side, and an upstream side of the catalyst layer of the present invention.

< Substrate >

The substrate can be appropriately selected from substrates of conventional exhaust gas purifying catalysts. Examples of the substrate include a wall-flow substrate and a flow-through substrate.

The material constituting the substrate can be appropriately selected from substrate materials of conventional exhaust gas purifying catalysts. Preferably, the material constituting the substrate is a material that allows the substrate to stably maintain its shape even when the substrate is exposed to, for example, 400°C or higher exhaust gas. Examples of the material of the substrate include: ceramics such as cordierite, silicon carbide (SiC) and aluminum titanate; and alloys such as stainless steel.

< Catalyst Layer >

The catalyst layer of the present invention is composed of the exhaust gas purifying catalyst composition of the present invention. That is, the catalyst layer of the present invention includes the Ce-based oxide particle, the Ce-Zr-based composite oxide particle, and the noble metal element. The descriptions in the above sections < Ce-based oxide particle >, < Ce-Zr-based composite oxide particle >, < Noble Metal Element >, and < Other Components > also apply to the catalyst layer of the present invention. When the descriptions apply to the catalyst layer of the present invention, "the exhaust gas purifying catalyst composition of the present invention" is read as "the catalyst layer of the present invention".

From the viewpoint of balancing the exhaust gas purification performance and the cost, the mass (mass after drying and firing) of the catalyst layer of the present invention per unit volume of the substrate is preferably 10 g/L or more and 300 g/L or less, more preferably 30 g/L or more and 200 g/L or less, and further preferably 50 g/L or more and 150 g/L or less. Here, the volume of the substrate means the apparent volume of the substrate. For example, when the substrate is cylindrical with an outer diameter of 2r, the volume of the substrate is represented by the formula: volume of substrate = $\pi \times r^2 \times$ (length of the substrate).

< First Embodiment >

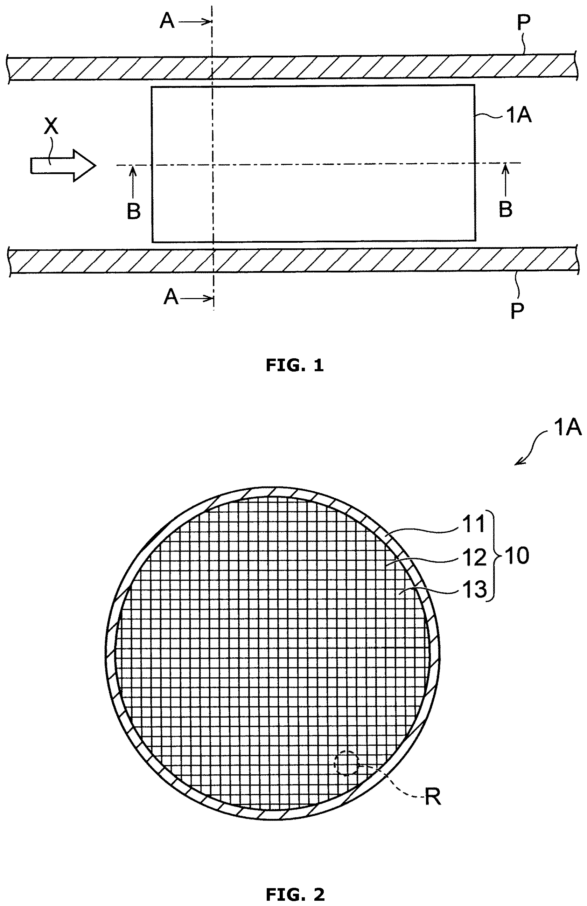

Below, an exhaust gas purifying catalyst 1A according to a first embodiment of the present invention will be described with reference to FIG. 1 to FIG. 4.

As depicted in FIG. 1, the exhaust gas purifying catalyst 1A is disposed in an exhaust gas path in an exhaust pipe P of an internal-combustion engine. Examples of the internal-combustion engine include a gasoline engine and the like. Exhaust gas emitted from the internal-combustion engine flows from one end of the exhaust pipe P toward the other end through the exhaust gas path in the exhaust pipe P, and is purified by the exhaust gas purifying catalyst 1A provided in the exhaust pipe P. In the drawing, the exhaust gas flow direction is denoted by the reference sign X. In the present description, the upstream position in the exhaust gas flow direction X is referred to as the "exhaust gas in-flow side", and the downstream position in the exhaust gas flow direction X is referred to as the "exhaust gas out-flow side", in some cases.

Together with the exhaust gas purifying catalyst 1A, another exhaust gas purifying catalyst may be disposed in the exhaust gas path in the exhaust pipe P. For example, it is possible that the exhaust gas purifying catalyst 1A is disposed upstream in the exhaust gas path in the exhaust pipe P, and that another exhaust gas purifying catalyst is disposed downstream in the exhaust gas path in the exhaust pipe P. Examples of another exhaust gas purifying catalyst include an exhaust gas purifying catalyst 1B described below and the like.

As depicted in FIG. 2 to FIG. 4, the exhaust gas purifying catalyst 1A includes: a substrate 10; and a catalyst layer 20 provided on the substrate 10.

The above descriptions related to the substrate also apply to the substrate 10.

The catalyst layer 20 is composed of the exhaust gas purifying catalyst composition of the present invention. That is, the catalyst layer 20 includes the Ce-based oxide particle, the Ce-Zr-based composite oxide particle, and the noble metal element. The above descriptions related to the catalyst layer of the present invention also apply to the catalyst layer 20.

As depicted in FIG. 2 to FIG. 4, the substrate 10 includes: a tubular member 11 that defines the external shape of the substrate 10; a partition wall 12 provided in the tubular member 11; and cells 13 separated from each other by the partition wall 12.

As depicted in FIG. 2, the tubular member 11 has a hollow cylindrical shape, and may have another shape, for example, an elliptic cylindrical shape or a polygonal tubular shape.

As depicted in FIG. 2 to FIG. 4, the partition wall 12 exists between the adjacent cells 13, and the adjacent cells 13 are separated from each other by the partition wall 12. The partition wall 12 is preferably porous. The thickness of the partition wall 12 is, for example, 20 $\mu$m or more and 1500 $\mu$m or less.

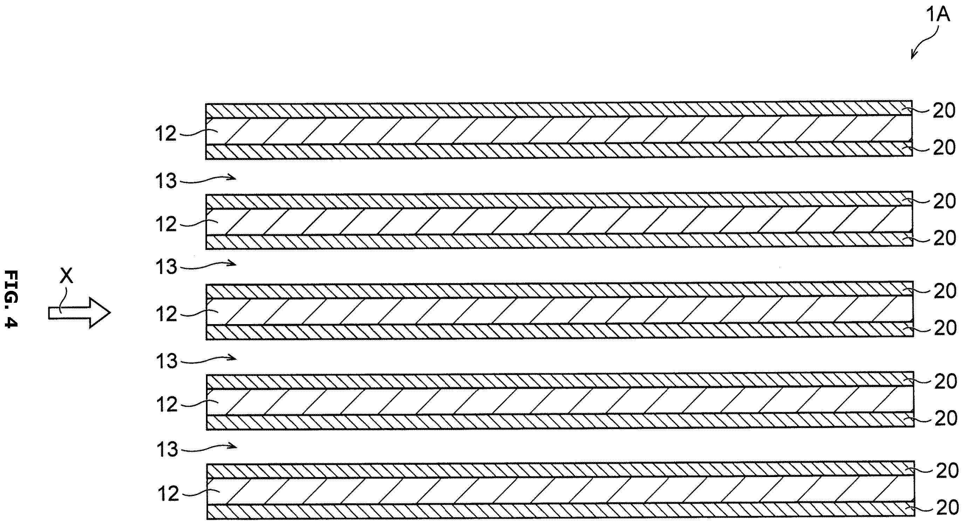

As depicted in FIG. 4, the cells 13 each extend in the exhaust gas flow direction X, and each have an end at the exhaust gas in-flow side and an end at the exhaust gas out-flow side.

As depicted in FIG. 4, both of the exhaust gas in-flow side end and the exhaust gas out-flow side end of the cell 13 are open. Accordingly, the exhaust gas that has flowed in through the exhaust gas in-flow side end (opening) of the cell 13 flows out through the exhaust gas out-flow side end (opening) of the cell 13. Such a manner is called a flow-through type.

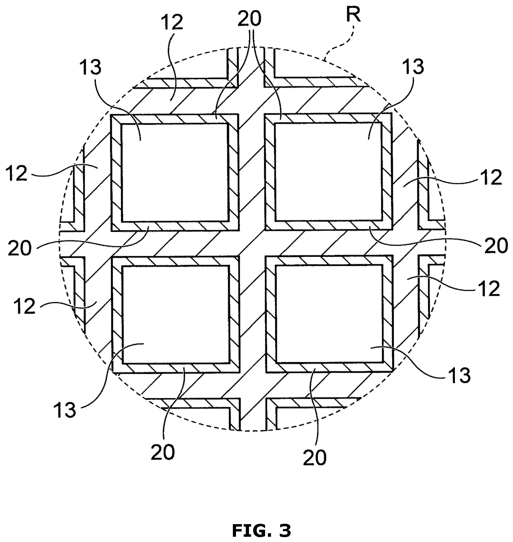

As depicted in FIG. 2 and FIG. 3, the planar-view shape of the exhaust gas in-flow side end (opening) of the cell 13 is quadrangle, and may be otherwise, for example, hexagonal or octagonal. The same applies to the planar-view shape of the exhaust gas out-flow side end (opening) of the cell 13.

Accordingly, the density of the cells per square inch of the substrate 10 is, for example, 300 cells or more and 900 cells or less. The density of the cells per square inch of the substrate 10 is the total number of the cells 13 per square inch of the cross-section obtained by cutting the substrate 10 along the plane perpendicular to the exhaust gas flow direction X.

As depicted in FIG. 4, the catalyst layer 20 is provided on the partition wall 12 of the substrate 10.

As depicted in FIG. 4, the catalyst layer 20 extends in the exhaust gas flow direction X from the exhaust gas in-flow side end of the partition wall 12 up to the exhaust gas out-flow side end of the partition wall 12. The catalyst layer 20 may extend in the exhaust gas flow direction X from the exhaust gas in-flow side end of the partition wall 12 but not up to the exhaust gas out-flow side end of the partition wall 12, or may extend in the direction opposite to the exhaust gas flow direction X from the exhaust gas out-flow side end of the partition wall 12 but not up to the exhaust gas in-flow side end of the partition wall 12.

The exhaust gas purifying catalyst 1A can be produced by forming the catalyst layer 20 on the partition wall portion 12 of the substrate 10. For example, the catalyst layer 20 can be formed on the partition wall portion 12 of the substrate 10 by mixing a noble metal salt-containing solution, a Ce-based oxide particle as a raw material, a Ce-Zr-based composite oxide particle as a raw material, and optionally other components (e.g., the other particle(s) as a raw material, a binder, a stabilizer, etc.) to prepare a slurry, coating the slurry on the partition wall portion 12 of the substrate 10, drying, and then firing. The noble metal salt, the solvent contained in the noble metal salt-containing solution, the drying conditions, the firing conditions, the crystallite size of $CeO_2$ in the Ce-based oxide particle as a raw material, and the like are the same as in the method for producing the exhaust gas purifying catalyst composition of the present invention.

< Second Embodiment >

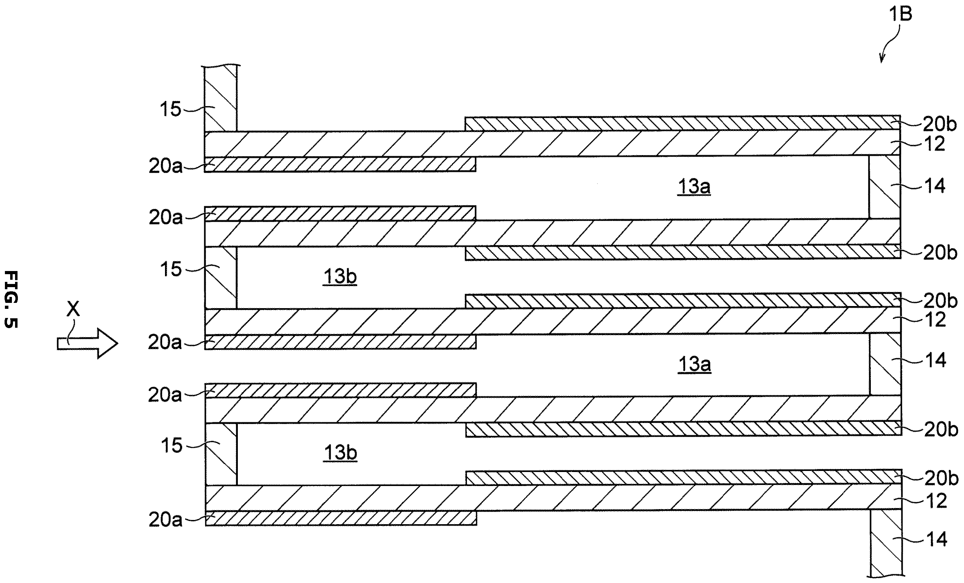

Below, an exhaust gas purifying catalyst 1B according to a second embodiment of the present invention will be described with reference to FIG. 5. In the exhaust gas purifying catalyst 1B, the same members as in the exhaust gas purifying catalyst 1A are denoted by the same reference signs as for the exhaust gas purifying catalyst 1A. Unless otherwise specified below, the above descriptions related to the exhaust gas purifying catalyst 1A also apply to the exhaust gas purifying catalyst 1B.

As depicted in FIG. 5, the exhaust gas purifying catalyst 1B is different from the exhaust gas purifying catalyst 1A,

in that a first sealing portion 14 that seals the exhaust gas out-flow side end of each of part of the cells 13 and a second sealing portion 15 that seals the exhaust gas in-flow side end of each of the remaining cells 13 are provided in the substrate 10, whereby an in-flow cell 13a, the exhaust gas in-flow side end of which is open and the exhaust gas out-flow side end of which is closed with the first sealing portion 14, and an out-flow cell 13b, the exhaust gas in-flow side end of which is closed with the second sealing portion 15 and the exhaust gas out-flow side end of which is open, are formed in the substrate 10, and

in that the catalyst layer 20a is provided on the in-flow cell 13a side of the partition wall 12 of the substrate 10, and the catalyst layer 20b is provided on the out-flow cell 13b side of the partition wall 12 of the substrate 10.

As depicted in FIG. 5, a plurality of (for example, four) out-flow cells 13b are disposed adjacently around one in-flow cell 13a, and the in-flow cell 13a and the out-flow cells 13b adjacent to the in-flow cell 13a are separated from each other by the porous partition wall 12.

As depicted in FIG. 5, the catalyst layer 20a extends in the exhaust gas flow direction X from the exhaust gas in-flow side end of the partition wall 12 but not up to the exhaust gas out-flow side end of the partition wall 12. The catalyst layer 20a may extend from the exhaust gas in-flow side end of the partition wall 12 up to the exhaust gas out-flow side end of the partition wall 12.

As depicted in FIG. 5, the catalyst layer 20b extends in the direction opposite to the exhaust gas flow direction X from the exhaust gas out-flow side end of the partition wall 12 but not up to the exhaust gas in-flow side end of the partition wall 12. The catalyst layer 20b may extend from the exhaust gas out-flow side end of the partition wall 12 up to the exhaust gas in-flow side end of the partition wall 12.

At least one of the catalyst layers 20a and 20b is the catalyst layer of the present invention, which includes the Ce-based oxide particle, the Ce-Zr-based composite oxide particle, and the noble metal element. The above descriptions related to the catalyst layer of the present invention also apply to the at least one of the catalyst layers 20a and 20b. The composition and the like of the catalyst layer 20a may be the same as or different from those of the catalyst layer 20b.

In the exhaust gas purifying catalyst 1B, exhaust gas that has flowed in through the exhaust gas in-flow side end (opening) of the in-flow cell 13a passes through the porous partition wall 12, and flows out through the exhaust gas out-flow side end (opening) of the out-flow cell 13b. Such a manner is called a wall-flow type.

When exhaust gas that has flowed in through the exhaust gas in-flow side end (opening) of the in-flow cell 13a passes through the porous partition wall 12 in the exhaust gas purifying catalyst 1B, a particulate matter (PM) in the exhaust gas is collected in the pores of the partition wall 12. Accordingly, the exhaust gas purifying catalyst 1B is useful as a gasoline particulate filter for a gasoline engine or a diesel particulate filter for a diesel engine.

The exhaust gas purifying catalyst 1B can be produced by the following method. The end of the substrate 10 on the exhaust gas inflow side is dipped in a slurry for forming the catalyst layer 20a, and the slurry is sucked from the opposite side and dried to form a precursor layer of the catalyst layer 20a. The end of the substrate 10 on the exhaust gas outflow side is dipped in a slurry for forming the catalyst layer 20b, and the slurry is sucked from the opposite side and dried to form a precursor layer of the catalyst layer 20b. After the precursor layer of the catalyst layer 20a and the precursor layer of the catalyst layer 20b are formed, the precursor layers are fired to form the catalyst layer 20a and the catalyst layer 20b, thereby producing the exhaust gas purifying catalyst 1B. The production conditions and the like of the exhaust gas purifying catalyst 1B are the same as those of the exhaust gas purifying catalyst 1A.

## EXAMPLES

The present invention will now be described in more detail below with reference to Examples, Comparative Examples, and Test Examples.

A cerium oxide powder was prepared for use in the following Examples, Comparative Examples, and Comparative Examples. The amount of Ce in terms of oxide $CeO_2$ in the cerium oxide powder was approximately 100% by mass (>99% by mass).

[**Example 1**]

(1) Production of Ce-based Oxide

The cerium oxide powder (the amount of Ce in terms of $CeO_2$: 95.0 g) was charged into an aqueous solution of aluminum nitrate (the amount of Al in terms of $Al_2O_3$: 5.0 g). The mixture was stirred at room temperature for 2 hours, and evaporated and dried to obtain a dry powder. The obtained dry powder was fired at 1000°C for 1 hour in air to obtain a Ce-based oxide powder of Example 1 (the amount of Ce in terms of $CeO_2$: 95.0% by mass, the amount of Al in terms of $Al_2O_3$: 5.0% by mass).

(2) Production of Exhaust Gas Purifying Catalyst Composition

In order to produce 100 parts by mass of a catalyst composition, 61.0 parts by mass of a Ce-Zr-based composite oxide powder (the amount of Ce in terms of $CeO_2$: 40% by mass, the amount of Zr in terms of $ZrO_2$: 50% by mass, the amount of La in terms of $La_2O_3$: 10% by mass), 28.0 parts by mass of an Al-based oxide powder (the amount of Al in terms of $Al_2O_3$: 99% by mass, the amount of La in terms of $La_2O_3$: 1% by mass), and 10.0 parts by mass of the Ce-based oxide powder of Example 1 (the amount of Ce in terms of $CeO_2$: 95.0% by mass, the amount of Al in terms of $Al_2O_3$: 5.0% by mass) were successively charged into an aqueous solution of diamminedinitritoplatinum in nitric acid (the amount of Pt in terms of metal: 1.0 parts by mass). The mixture was left to stand for 1 hour to impregnate and support the aqueous solution of diamminedinitritoplatinum in nitric acid on the Ce-Zr-based composite oxide powder, the Al-based oxide powder, and the Ce-based oxide powder, and then evaporated and dried to obtain a dry powder. The obtained dry powder was fired at 500°C for 1 hour in an air atmosphere to obtain a powdery catalyst composition.

When the obtained catalyst composition was analyzed with an electron probe microanalyzer (EPMA), $Al_2O_3$ present at the same position as $CeO_2$ was detected. From this, it was confirmed that the Ce-based oxide particle contained in the catalyst composition was composed of an oxide containing Ce and Al.

[**Example 2**]

(1) Production of Ce-based Oxide

A Ce-based oxide powder of Example 2 (the amount of Ce in terms of $CeO_2$: 95.0% by mass, the amount of Mg in terms of MgO: 5.0% by mass) was obtained in the same manner as in Example 1, except that an aqueous solution of magnesium nitrate (the amount of Mg in terms of MgO: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Example 2 was used instead of the Ce-based oxide powder of Example 1.

When the obtained catalyst composition was analyzed with an EPMA, MgO present at the same position as $CeO_2$ was detected. From this, it was confirmed that the Ce-based oxide particle contained in the catalyst composition was composed of an oxide containing Ce and Mg.

[**Example 3**]

(1) Production of Ce-based Oxide

A Ce-based oxide powder of Example 3 (the amount of Ce in terms of $CeO_2$: 95.0% by mass, the amount of La in terms of $La_2O_3$: 5.0% by mass) was obtained in the same manner as in Example 1, except that an aqueous solution of lanthanum nitrate (the amount of La in terms of $La_2O_3$: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Example 3 was used instead of the Ce-based oxide powder of Example 1.

When the obtained catalyst composition was analyzed with an EPMA, $La_2O_3$ present at the same position as $CeO_2$ was detected. From this, it was confirmed that the Ce-based oxide particle contained in the catalyst composition was composed of an oxide containing Ce and La.

[**Example 4**]

(1) Production of Ce-based Oxide

A Ce-based oxide powder of Example 4 (the amount of Ce in terms of $CeO_2$: 95.0% by mass, the amount of Pr in terms of PreOn: 5.0% by mass) was obtained in the same manner as in Example 1, except that an aqueous solution of praseodymium nitrate (the amount of Pr in terms of PreOn: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Example 4 was used instead of the Ce-based oxide powder of Example 1.

When the obtained catalyst composition was analyzed with an EPMA, $Pr_6O_{11}$ present at the same position as $CeO_2$ was detected. From this, it was confirmed that the Ce-based oxide particle contained in the catalyst composition was composed of an oxide containing Ce and Pr.

[**Example 5**]

(1) Production of Ce-based Oxide

A Ce-based oxide powder of Example 5 (the amount of Ce in terms of $CeO_2$: 95.0% by mass, the amount of Y in terms of $Y_2O_3$: 5.0% by mass) was obtained in the same manner as in Example 1, except that an aqueous solution of yttrium nitrate (the amount of Y in terms of $Y_2O_3$: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Example 5 was used instead of the Ce-based oxide powder of Example 1.

When the obtained catalyst composition was analyzed with an EPMA, $Y_2O_3$ present at the same position as $CeO_2$ was detected. From this, it was confirmed that the Ce-based oxide particle contained in the catalyst composition was composed of an oxide containing Ce and Y.

[**Example 6**]

(1) Production of Ce-based Oxide

A Ce-based oxide powder of Example 6 (the amount of Ce in terms of $CeO_2$: 95.0% by mass, the amount of Nd in terms of $Nd_2O_3$: 5.0% by mass) was obtained in the same manner as in Example 1, except that an aqueous solution of neodymium nitrate (the amount of Nd in terms of $Nd_2O_3$: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Example 6 was used instead of the Ce-based oxide powder of Example 1.

When the obtained catalyst composition was analyzed with an EPMA, $Nd_2O_3$ present at the same position as $CeO_2$ was detected. From this, it was confirmed that the Ce-based oxide particle contained in the catalyst composition was composed of an oxide containing Ce and Nd.

[**Comparative Example 1**]

In order to produce 100 parts by mass of a catalyst composition, 66.0 parts by mass of a Ce-Zr-based composite oxide powder (the amount of Ce in terms of $CeO_2$: 40% by mass, the amount of Zr in terms of $ZrO_2$: 50% by mass, the amount of La in terms of $La_2O_3$: 10% by mass), and 33.0 parts by mass of an Al-based oxide powder (the amount of Al in terms of $Al_2O_3$: 99% by mass, the amount of La in terms of $La_2O_3$: 1% by mass) were successively charged into an aqueous solution of diamminedinitritoplatinum in nitric acid (the amount of Pt in terms of metal: 1.0 parts by mass). The mixture was left to stand for 1 hour to impregnate and support the aqueous solution of diamminedinitritoplatinum in nitric acid on the Ce-Zr-based composite oxide powder, and the Al-based oxide powder, and then evaporated and dried to obtain a dry powder. The obtained dry powder was fired at 500°C for 1 hour in an air atmosphere to obtain a powdery catalyst composition.

[**Comparative Example 2**]

In order to produce 100 parts by mass of a catalyst composition, 61.0 parts by mass of a Ce-Zr-based composite oxide powder (the amount of Ce in terms of $CeO_2$: 40% by mass, the amount of Zr in terms of $ZrO_2$: 50% by mass, the amount of La in terms of $La_2O_3$: 10% by mass), 28.0 parts by mass of an Al-based oxide powder (the amount of Al in terms of $Al_2O_3$: 99% by mass, the amount of La in terms of $La_2O_3$: 1% by mass), and 10.0 parts by mass of a cerium oxide powder (the amount of Ce in terms of $CeO_2$: approximately 100% by mass (>99% by mass) were successively charged into an aqueous solution of diamminedinitritoplatinum in nitric acid (the amount of Pt in terms of metal: 1.0 parts by mass). The mixture was left to stand for 1 hour to impregnate and support the aqueous solution of diamminedinitritoplatinum in nitric acid on the Ce-Zr-based composite oxide powder, the Al-based oxide powder, and the cerium oxide powder, and then evaporated and dried to obtain a dry powder. The obtained dry powder was fired at 500°C for 1 hour in an air atmosphere to obtain a powdery catalyst composition.

When the obtained catalyst composition was analyzed with an EPMA, almost no $Al_2O_3$ present at the same position as $CeO_2$ was detected.

[Comparative Example 3]

(1) Production of Ce-based Oxide

A Ce-based oxide powder of Comparative Example 3 (the amount of Ce in terms of $CeO_2$: 95.0% by mass, the amount of Zr in terms of $ZrO_2$: 5.0% by mass) was obtained in the same manner as in Example 1, except that an aqueous solution of zirconium nitrate (the amount of Zr in terms of $ZrO_2$: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Comparative Example 3 was used instead of the Ce-based oxide powder of Example 1.

When the obtained catalyst composition was analyzed with an EPMA, $ZrO_2$ present at the same position as $CeO_2$ was detected. From this, it was confirmed that the Ce-based oxide particle contained in the catalyst composition was composed of an oxide containing Ce and Zr.

[**Comparative Example 4**]

(1) Production of Ce-based Oxide

A Ce-based oxide powder of Comparative Example 4 (the amount of Ce in terms of $CeO_2$: 95.0% by mass, the amount of P in terms of $P_4O_{10}$: 5.0% by mass) was obtained in the same manner as in Example 1, except that an aqueous solution of phosphoric acid (the amount of P in terms of $P_4O_{10}$: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Comparative Example 4 was used instead of the Ce-based oxide powder of Example 1.

When the obtained catalyst composition was analyzed with an EPMA, $P_4O_{10}$ present at the same position as $CeO_2$ was detected. From this, it was confirmed that the Ce-based oxide particle contained in the catalyst composition was composed of an oxide containing Ce and P.

[**Comparative Example 5**]

(1) Production of Ce-based Oxide

A Ce-based oxide powder of Comparative Example 5 (the amount of Ce in terms of $CeO_2$: 95.0% by mass, the amount of Sn in terms of SnO: 5.0% by mass) was obtained in the same manner as in Example 1, except that an aqueous solution of tin nitrate (the amount of Sn in terms of SnO: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Comparative Example 5 was used instead of the Ce-based oxide powder of Example 1.

When the obtained catalyst composition was analyzed with an EPMA, SnO present at the same position as $CeO_2$ was detected. From this, it was confirmed that the Ce-based oxide particle contained in the catalyst composition was composed of an oxide containing Ce and Sn.

[**Comparative Example 6**]

(1) Production of Ce-based Oxide

A Ce-based oxide powder of Comparative Example 6 (the amount of Ce in terms of $CeO_2$: 95.0% by mass, the amount of In in terms of $In_2O_3$: 5.0% by mass) was obtained in the same manner as in Example 1, except that an aqueous solution of indium nitrate (the amount of In in terms of $In_2O_3$: 5.0 g) was used instead of the aqueous solution of aluminum nitrate.

(2) Production of Exhaust Gas Purifying Catalyst Composition

A powdery catalyst composition was obtained in the same manner as in Example 1, except that the Ce-based oxide powder of Comparative Example 6 was used instead of the Ce-based oxide powder of Example 1.

When the obtained catalyst composition was analyzed with an EPMA, $In_2O_3$ present at the same position as $CeO_2$ was detected. From this, it was confirmed that the Ce-based oxide particle contained in the catalyst composition was composed of an oxide containing Ce and In.

[Test Example 1]

(1) Measurement of Average Particle Aize of Ce-based Oxide Powder

The average particle size of each of the Ce-based oxide powders obtained in Examples 1 to 6 and Comparative Examples 1 to 6 was measured as follows. The Ce-based oxide powder was observed using a scanning electron microscope (JCM-7000, manufactured by JEOL), and unidirectional particle diameters (Feret diameters) of 100 particles arbitrarily selected from the visual field were measured to define an average value as the average particle size of the Ce-based oxide powder.

(2) Measurement of Crystallite Size Using Ce-based Oxide Powder

Using each of the Ce-based oxide powders obtained in Examples 1 to 6 and Comparative Examples 1 to 6, the crystallite size of $CeO_2$ in the Ce-based oxide particle was measured as follows. Using the Ce-based oxide powder and a commercially available powder X-ray diffractometer ("MiniFlex 600", manufactured by Rigaku Corporation), X-ray diffraction (XRD) was performed under conditions of: X-ray source: CuK$\alpha$, operating axis: $2\theta/\theta$, measuring method: continuous, counting unit: cps, start angle: 5°, end angle: 90°, sampling width: 0.02°, scan speed: 10°/min, voltage: 40 kV, and current: 150 mA. In the obtained XRD pattern, among the diffraction peaks derived from $CeO_2$, the peak present at $2\theta = 55$ to 58° and the peak present at $2\theta = 46$ to 49° were identified, and using analysis software ("PDXL version 2", manufactured by Rigaku Corporation), the Scherrer equation was applied to the identified peaks to automatically calculate the crystallite size. The crystallite size determined from the peak present at $2\theta = 55$ to 58° and the crystallite size determined from the peak present at $2\theta = 46$ to 49° were compared, and the larger crystallite size was selected as the crystallite size of $CeO_2$ in the Ce-based oxide particle.

(3) Measurement of Crystallite Size Using Catalyst Composition

Using each of the catalyst compositions obtained in Examples 1 to 6 and Comparative Examples 1 to 6, the crystallite size of $CeO_2$ in the Ce-based oxide particle was measured in the same manner as in (2) above.

(4) Measurement of Degree of Noble Metal Dispersion

Using a quartz tubular furnace, each of the catalyst compositions obtained in Examples 1 to 6 and Comparative Examples 1 to 6 was heat-treated at 1000°C for 20 hours in an atmosphere in which 0.5% by volume of $O_2$ gas, 10% by volume of $H_2O$ as water vapor, and $N_2$ as the balance were flowing. Using the heat-treated catalyst composition and a metal dispersion measurement device (BELMETAL3 manufactured by MicrotracBel Corp.), the amount of CO adsorbed to the noble metal was measured by a CO pulse method, and the degree of noble metal dispersion was calculated. Here, the degree of noble metal dispersion is the ratio of the number B of noble metal atoms exposed to the noble metal particle surface to the total number A of noble metal atoms in the catalyst composition (Pt in Examples 1 to 6 and Comparative Examples 1 to 6), and is calculated based on the formula: the degree of noble metal dispersion (%) = (B/A) $\times$ 100. The number B of noble metal atoms exposed to the noble metal particle surface is calculated from the amount of CO adsorbed measured by the CO pulse method, based on the premise that the noble metal atoms exposed to the noble metal particle surface and the CO are adsorbed at a ratio of 1:1.

(5) Measurement of OSC Amount

The OSC of each of the catalyst compositions obtained in Examples 1 to 6 and Comparative Examples 1 to 6 was measured by a CO pulse method using a metal dispersion measurement device (BELMETAL3 manufactured by MicrotracBel Corp.).
In the OSC measurement, after performing a pretreatment in which the temperature of the catalyst composition was increased to 800°C under a He flow and held at that temperature for 40 minutes, the temperature was lowered to 300°C. Next, while holding the catalyst composition at 300°C, $O_2$ gas was injected in 4 pulses to carry out an oxidation treatment, and then a test gas containing CO was injected in 10 pulses. From the total amount of consumed CO gas, an OSC amount ($\mu$mol/g) per unit weight of the catalyst composition was measured using a thermal conductivity detector (TCD) built into a metal dispersion measurement device (BELMETAL3 manufactured by MicrotracBel Corp.).

(6) Evaluation of Exhaust Gas Purification Performance

Using a quartz tubular furnace, each of the catalyst compositions obtained in Examples 1 to 6 and Comparative Examples 1 to 6 was heat-treated at 1000°C for 30 hours in an atmosphere in which 0.5% by volume of $O_2$ gas, 10% by volume of $H_2O$ as water vapor, and $N_2$ as the balance were flowing. The heat-treated catalyst composition was filled in a reaction tube, and the exhaust gas purification performance of the catalyst composition after the heat treatment was measured using a fixed bed flow reactor. Specifically, 0.1 g of the heat-treated catalyst composition was filled in the reaction tube, simulated exhaust gas (CO: 3000 ppm, $C_3H_6$: 1000 ppm C, NO: 500 ppm, $O_2$: 0.28%, $CO_2$: 14%, $H_2O$: 10%, $N_2$: balance) was introduced into the reaction tube under the conditions of a temperature increase rate of 10 °C/min, an air-fuel ratio (A/F) of 14.6, and a total flow rate of 1000 mL/min. It is noted that "A/F" is an abbreviation for Air/Fuel, and is a numerical value indicating the ratio of air to fuel. After the temperature was increased to 600°C at a rate of temperature increase of 10 °C/min, the temperature was maintained for 10 minutes to perform a pretreatment. Then, after cooling, the temperature was increased from 100°C to 600°C at a rate of temperature increase of 10 °C/min, the amount of NO contained in the simulated exhaust gas flowing out from the outlet of the reaction tube was measured by Fourier transform infrared spectroscopy (FT-IR), and the purification rate was determined based on the following formula. In the following formula, X represents the detected amount when the catalyst composition was not set, and Y represents the detected amount when the catalyst composition was set.

$$\text{Purification rate (\%)} = (X-Y)/X \times 100$$

The gas temperature in the inlet of the reaction tube when the NO purification efficacy reached 50% was determined as the light-off temperature T50 (°C). The light-off temperature T50 was determined in the case of temperature rise.

Table 1 shows the measurement results of the average particle size of the Ce-based oxide powder and the crystallite size of $CeO_2$ measured using the Ce-based oxide powder. Table 2 shows the measurement results of the crystallite size of $CeO_2$, degree of noble metal dispersion, OSC amount, and T50 measured using the catalyst composition. Table 1 also shows the compositional make-up and added amount of the Ce-based oxide powder used as the material of the catalyst composition in Examples 1 to 6 and Comparative Examples 1 to 6. In Table 1, "CeO2" is the amount of Ce in terms of $CeO_2$ (% by mass), "$Al_2O_3$" is the amount of Al in terms of $Al_2O_3$ (% by mass), "MgO" is the amount of Mg in terms of MgO (% by mass), "$La_2O_3$" is the amount of La in terms of $La_2O_3$ (% by mass), "PreOn" is the amount of Pr in terms of $Pr_6O_{11}$ (% by mass), "$Y_2O_3$" is the amount of Y in terms of $Y_2O_3$ (% by mass), "$Nd_2O_3$" is the amount of Nd in terms of $Nd_2O_3$ (% by mass), "$ZrO_2$" is the amount of Zr in terms of $ZrO_2$, "$P_4O_{10}$" is the amount of P in terms of $P_4O_{10}$ (% by mass), "SnO" is the amount of Sn in terms of SnO (% by mass), and "$In_2O_3$" is the amount of In in terms of $In_2O_3$ (% by mass).

[Table 1]

Ce-based Oxide Powder

| | Composition (% by mass) | | | | | | | | | | | Average Particle Size (μm) | Crystallite Size of CeO2 (nm) | Amount Added (parts by mass) |
|---|---|---|---|---|---|---|---|---|---|---|---|---|---|---|
| | CeOz | Al2O3 | MgO | La2O3 | Pr6O11 | Y2O3 | Nd2O3 | ZrOz | P4O10 | SnO | In2O3 | | | |
| Example 1 | 95.0 | 5.0 | - | - | - | - | - | - | - | - | - | 5.0 | 18.0 | 10 |
| Example 2 | 95.0 | - | 5.0 | - | - | - | - | - | - | - | - | 5.1 | 31.8 | 10 |
| Example 3 | 95.0 | - | - | 5.0 | - | - | - | - | - | - | - | 5.0 | 25.0 | 10 |
| Example 4 | 95.0 | - | - | - | 5.0 | - | - | - | - | - | - | 5.1 | 37.9 | 10 |
| Example 5 | 95.0 | - | - | - | - | 5.0 | - | - | - | - | - | 5.1 | 37.3 | 10 |
| Example 6 | 95.0 | - | - | - | - | - | 5.0 | - | - | - | - | 5.0 | 28.9 | 10 |
| Comparative Example 1 | - | - | - | - | - | - | - | - | - | - | - | - | - | 0 |
| Comparative Example 2 | 100 | - | - | - | - | - | - | - | - | - | - | 5.0 | 7.0 | 10 |
| Comparative Example 3 | 95.0 | - | - | - | - | - | - | 5.0 | - | - | - | 5.0 | 22.0 | 10 |
| Comparative Example 4 | 95.0 | - | - | - | - | - | - | - | 5.0 | - | - | 5.2 | 35.0 | 10 |
| Comparative Example 5 | 95.0 | - | - | - | - | - | - | - | - | 5.0 | - | 5.2 | 31.0 | 10 |
| Comparative Example 6 | 95.0 | - | - | - | - | - | - | - | - | - | 5.0 | 5.0 | 33.0 | 10 |

[Table 2]

| | Catalyst Composition | | | |
|---|---|---|---|---|
| | Crystallite Size of CeOz (nm) | T50 (°C) | Degree of Noble Metal Dispersion (%) | OSC Amount (μmol/g) |
| Example 1 | 14.2 | 442 | 0.83 | 12.5 |
| Example 2 | 28.7 | 395 | 0.81 | 15.1 |
| Example 3 | 21.8 | 367 | 0.29 | 56.3 |
| Example 4 | 32.8 | 412 | 0.24 | 55.2 |
| Example 5 | 39.7 | 400 | 0.10 | 48.1 |
| Example 6 | 25.9 | 475 | 0.26 | 47.0 |
| Comparative Example 1 | - | 569 | 0.23 | 17.6 |
| Comparative Example 2 | 7.0 | 492 | 0.48 | 10.2 |
| Comparative Example 3 | 18.6 | 493 | 0.34 | 9.7 |
| Comparative Example 4 | 50.6 | 533 | 0.37 | 9.0 |
| Comparative Example 5 | 27.5 | 502 | 0.48 | 2.2 |
| Comparative Example 6 | 32.9 | 572 | 0.46 | 8.2 |

As shown in Table 2, the T50 of the catalyst compositions of Examples 1 to 6 was lower than the T50 of the catalyst compositions of Comparative Examples 1 to 6, and the exhaust gas purification performance of the catalyst compositions of Examples 1 to 6 was improved than the exhaust gas purification performance of the catalyst compositions of Comparative Examples 1 to 6.

As shown in Table 2, the degree of noble metal dispersion in the catalyst compositions of Examples 1 and 2 was higher than the degree of noble metal dispersion in the catalyst compositions of Examples 3 to 6, although the catalyst compositions of Examples 3 to 6 had a larger OSC amount than that of the catalyst compositions of Examples 1 and 2. From these results, it was found that the catalyst compositions of Examples 1 and 2 have a different mechanism for improving exhaust gas purification performance than that of the catalyst compositions of Examples 3 to 6.

Specifically, it is thought that when a Ce-based oxide particle contains a first additional element selected from Al and Mg, the heat resistance of the Ce-based oxide particle is improved, and the decrease in specific surface area of the Ce-based oxide particle and the burial of a catalytically active component in the Ce-based oxide particle caused thereby are suppressed, which result in an improvement in the specific surface area of an exhaust gas purifying catalyst composition, an improvement in the degree of dispersion of the catalytically active component, and an improvement in the exhaust gas purification performance of the exhaust gas purifying catalyst composition.

Further, it is thought that when a Ce-based oxide powder contains a second additional element selected from La, Pr, Y and Nd, the oxygen storage capacity of the Ce-based oxide particle after supporting a noble metal element is improved, which results in an improvement in the exhaust gas purification performance of an exhaust gas purifying catalyst composition.

[Test Example 2]

In Test Example 2, a test was conducted to determine a suitable range for the content of a first additional element selected from Al and Mg.

(1) Test Example 2A

A Ce-based oxide powder of Test Example 2A (the amount of Ce in terms of $CeO_2$: 99.9% by mass, the amount of Al in terms of $Al_2O_3$: 0.1% by mass) was obtained in the same manner as in Example 1, except that a cerium oxide powder (the amount of Ce in terms of $CeO_2$: 99.9 g) was charged into an aqueous solution of aluminum nitrate (the amount of Al in terms of $Al_2O_3$: 0.1 g).

(2) Test Example 2B

A Ce-based oxide powder of Test Example 2B (the amount of Ce in terms of $CeO_2$: 97.5% by mass, the amount of Al in terms of $Al_2O_3$: 2.5% by mass) was obtained in the same manner as in Example 1, except that a cerium oxide powder (the amount of Ce in terms of $CeO_2$: 97.5 g) was charged into an aqueous solution of aluminum nitrate (the amount of Al in terms of $Al_2O_3$: 2.5 g).

(3) Test Example 2C

The Ce-based oxide powder obtained in Example 1 (the amount of Ce in terms of $CeO_2$: 95.0% by mass, the amount of Al in terms of $Al_2O_3$: 5.0% by mass) was used as a Ce-based oxide powder of Test Example 2C.

(4) Test Example 2D

A Ce-based oxide powder of Test Example 2D (the amount of Ce in terms of $CeO_2$: 90.0% by mass, the amount of Al in terms of $Al_2O_3$: 10.0% by mass) was obtained in the same manner as in Example 1, except that a cerium oxide powder (the amount of Ce in terms of $CeO_2$: 90.0 g) was charged into an aqueous solution of aluminum nitrate (the amount of Al in terms of $Al_2O_3$: 10.0 g).

(5) Test Example 2E

A Ce-based oxide powder of Test Example 2E (the amount of Ce in terms of $CeO_2$: 80.0% by mass, the amount of Al in terms of $Al_2O_3$: 20.0% by mass) was obtained in the same manner as in Example 1, except that a cerium oxide powder (the amount of Ce in terms of $CeO_2$: 80.0 g) was charged into an aqueous solution of aluminum nitrate (the amount of Al in terms of $Al_2O_3$: 20.0 g).

(6) Test Example 2F

A cerium oxide powder was fired in air at 1000°C for 1 hour to obtain a Ce-based oxide powder (the amount of Ce in terms of $CeO_2$: approximately 100% by mass (>99% by mass)) of Test Example 2F.

(7) Measurement of Average Particle Size of Ce-based Oxide Powder

The average particle size of each of the Ce-based oxide powders of Test Examples 2A to 2F was measured in the same manner as in Test Example 1 (1). The measurement results are shown in Table 3.

(8) Measurement of Crystallite Size Using Ce-based Oxide Powder

Using each of the Ce-based oxide powders of Test Examples 2A to 2F, the crystallite size of $CeO_2$ in the Ce-based oxide particle was measured in the same manner as in Test Example 1 (2). The measurement results are shown in Table 3.

(9) Measurement of BET Specific Surface Area

The BET specific surface area of each of the Ce-based oxide powders of Test Examples 2A to 2F was measured by the $N_2$ gas adsorption method using a QUADRASORB SI manufactured by Quantachrome Corporation. The measurement results are shown in Table 3.

[Table 3]

| | | Ce-based Oxide Powder | | | |
|---|---|---|---|---|---|
| | | Composition (% by mass) | | Average Particle Size ($\mu$m) | Crystallite Size of $CeO_2$ (nm) | Specific Surface Area ($m^2$/g) |
| | | $CeO_2$ | $Al_2O_3$ | | | |
| Test Example 2A | | 99.9 | 0.1 | 4.9 | 17.5 | 25.4 |
| Test Example 2B | | 97.5 | 2.5 | 4.9 | 19.9 | 34.6 |
| Test Example 2C | | 95.0 | 5.0 | 5.0 | 18.0 | 36.2 |
| Test Example 2D | | 90.0 | 10.0 | 5.0 | 16.8 | 33.0 |
| Test Example 2E | | 80.0 | 20.0 | 5.1 | 16.1 | 27.8 |
| Test Example 2F | | 100 | - | 5.0 | 40.0 | 25.0 |

As shown in Table 3, the BET specific surface area of each of the Ce-based oxide powders of Test Examples 2A to 2E was larger than the BET specific surface area of the Ce-based oxide powder of Test Example 2F. From these results, it was discovered that a suitable range for the amount of the first additional element in terms of oxide in the Ce-based oxide powder is 0.1% by mass or more and 20% by mass or less based on the mass of the Ce-based oxide powder.

[Test Example 3]

In Test Example 3, a test was conducted to determine a suitable range for the content of the second additional element selected from La, Pr, Y, and Nd.

(1) Test Example 3A

A Ce-based oxide powder of Test Example 3A (the amount of Ce in terms of $CeO_2$: 99.9% by mass, the amount of La in terms of $La_2O_3$: 0.1% by mass) was obtained in the same manner as in Example 1, except that a cerium oxide powder (the amount of Ce in terms of $CeO_2$: 99.9 g) was charged into an aqueous solution of lanthanum nitrate (the amount of La in terms of $La_2O_3$: 0.1 g).
A powdery catalyst composition was obtained in the same manner as in Example 1, except that the Ce-based oxide powder of Test Example 3A was used instead of the Ce-based oxide powder of Example 1.

(2) Test Example 3B

A Ce-based oxide powder of Test Example 3B (the amount of Ce in terms of $CeO_2$: 97.5% by mass, the amount of La in terms of $La_2O_3$: 2.5% by mass) was obtained in the same manner as in Example 1, except that a cerium oxide powder (the amount of Ce in terms of $CeO_2$: 97.5 g) was charged into an aqueous solution of lanthanum nitrate (the amount of La in terms of $La_2O_3$: 2.5 g).
A powdery catalyst composition was obtained in the same manner as in Example 1, except that the Ce-based oxide powder of Test Example 3B was used instead of the Ce-based oxide powder of Example 1.

(3) Test Example 3C

The Ce-based oxide powder obtained in Example 3 (the amount of Ce in terms of $CeO_2$: 95.0% by mass, the amount of La in terms of $La_2O_3$: 5.0% by mass) was used as a Ce-based oxide powder of Test Example 3C.

A powdery catalyst composition was obtained in the same manner as in Example 1, except that the Ce-based oxide powder of Test Example 3C was used instead of the Ce-based oxide powder of Example 1.

(4) Test Example 3D

A Ce-based oxide powder of Test Example 3D (the amount of Ce in terms of $CeO_2$: 90.0% by mass, the amount of La in terms of $La_2O_3$: 10.0% by mass) was obtained in the same manner as in Example 1, except that a cerium oxide powder (the amount of Ce in terms of $CeO_2$: 90.0 g) was charged into an aqueous solution of lanthanum nitrate (the amount of La in terms of $La_2O_3$: 10.0 g).

A powdery catalyst composition was obtained in the same manner as in Example 1, except that the Ce-based oxide powder of Test Example 3D was used instead of the Ce-based oxide powder of Example 1.

(5) Test Example 3E

A Ce-based oxide powder of Test Example 3E (the amount of Ce in terms of $CeO_2$: 80.0% by mass, the amount of La in terms of $La_2O_3$: 20.0% by mass) was obtained in the same manner as in Example 1, except that a cerium oxide powder (the amount of Ce in terms of $CeO_2$: 80.0 g) was charged into an aqueous solution of lanthanum nitrate (the amount of La in terms of $La_2O_3$: 20.0 g).

A powdery catalyst composition was obtained in the same manner as in Example 1, except that the Ce-based oxide powder of Test Example 3E was used instead of the Ce-based oxide powder of Example 1.

(6) Test Example 3F

A cerium oxide powder was fired in air at 1000°C for 1 hour to obtain a Ce-based oxide powder (the amount of Ce in terms of $CeO_2$: approximately 100% by mass (>99% by mass)) of Test Example 3F.

A powdery catalyst composition was obtained in the same manner as in Example 1, except that the Ce-based oxide powder of Test Example 3F was used instead of the Ce-based oxide powder of Example 1.

(7) Test Example 3G

A Ce-based oxide powder of Test Example 3G (the amount of Ce in terms of $CeO_2$: 70.0% by mass, the amount of La in terms of $La_2O_3$: 30.0% by mass) was obtained in the same manner as in Example 1, except that a cerium oxide powder (the amount of Ce in terms of $CeO_2$: 70.0 g) was charged into an aqueous solution of lanthanum nitrate (the amount of La in terms of $La_2O_3$: 30.0 g).

A powdery catalyst composition was obtained in the same manner as in Example 1, except that the Ce-based oxide powder of Test Example 3G was used instead of the Ce-based oxide powder of Example 1.

(8) Measurement of Average Particle Size of Ce-based Oxide Powder

The average particle size of each of the Ce-based oxide powders of Test Examples 3A to 3G was measured in the same manner as in Test Example 1 (1). The measurement results are shown in Table 4.

(9) Measurement of Crystallite Size Using Ce-based Oxide Powder

Using each of the Ce-based oxide powders of Test Examples 3A to 3G, the crystallite size of $CeO_2$ in the Ce-based oxide particle was measured in the same manner as in Test Example 1 (2). The measurement results are shown in Table 4.

(10) Measurement of OSC Amount

The OSC of each of the catalyst compositions of Test Examples 3A to 3G was measured by the CO pulse method in the same manner as in Test Example 1 (5). The measurement results are shown in Table 4.

[Table 4]

| | Ce-based Oxide Powder | | | | Catalyst Composition |
| --- | --- | --- | --- | --- | --- |
| | Composition (% by mass) | | Average Particle Size (μm) | Crystallite Size of $CeO_2$ (nm) | OSC Amount (μmol/g) |
| | $CeO_2$ | $La_2O_3$ | | | |
| Test Example 3A | 99.9 | 0.1 | 4.9 | 34.2 | 17.7 |
| Test Example 3B | 97.5 | 2.5 | 5.0 | 30.1 | 31.7 |
| Test Example 3C | 95.0 | 5.0 | 5.0 | 25.0 | 56.3 |
| Test Example 3D | 90.0 | 10.0 | 5.0 | 22.1 | 26.3 |
| Test Example 3E | 80.0 | 20.0 | 5.0 | 22.1 | 18.4 |
| Test Example 3F | 100 | - | 5.0 | 40.0 | 17.6 |
| Test Example 3G | 70.0 | 30.0 | 5.0 | 12.2 | 5.5 |

As shown in Table 4, the OSC amount of each of the catalyst compositions of Test Examples 3A to 3E was greater than the OSC amount of each of the catalyst compositions of Test Examples 3F and 3G. From these results, it was discovered that a suitable range for the amount of the second additional element in terms of oxide in the Ce-based oxide powder is 0.1% by mass or more and 20% by mass or less based on the mass of the Ce-based oxide powder.

Description of Symbols

| 1A, 1B | exhaust gas purifying catalyst |
| 10 | substrate |
| 11 | cylindrical portion |
| 12 | partition wall portion |
| 13 | cell |
| 20, 20a, 20b | catalyst layer |

Claims

1.   An exhaust gas purifying catalyst composition comprising a Ce-based oxide particle, a Ce-Zr-based composite oxide particle, and a noble metal element,

wherein the Ce-based oxide particle comprises at least one type of additional element selected from Al, Mg, La, Pr, Y, and Nd,
wherein an amount of Ce in terms of $CeO_2$ in the Ce-based oxide particle is 80% by mass or more based on a mass of the Ce-based oxide particle,
wherein an amount of the at least one type of additional element in terms of oxide in the Ce-based oxide particle is 0.1% by mass or more and 20% by mass or less based on the mass of the Ce-based oxide particle, and
wherein an amount of Ce in terms of $CeO_2$ in the Ce-Zr-based composite oxide particle is 5% by mass or more and 90% by mass or less based on a mass of the Ce-Zr-based composite oxide particle.

2. The exhaust gas purifying catalyst composition according to claim 1, wherein a crystallite size of $CeO_2$ in the Ce-based oxide particle is 10 nm or more.

3. The exhaust gas purifying catalyst composition according to claim 1 or 2, wherein the noble metal element comprises a noble metal element supported on the Ce-based oxide particle and a noble metal element supported on the Ce-Zr-based composite oxide particle.

4. The exhaust gas purifying catalyst composition according to any one of claims 1 to 3, wherein the noble metal element is selected from Rh and Pt.

5. The exhaust gas purifying catalyst composition according to any one of claims 1 to 4, wherein the Ce-based oxide particle has an average particle size of 0.10 $\mu$m or more and 15 $\mu$m or less.

6. The exhaust gas purifying catalyst composition according to any one of claims 1 to 5, wherein an amount of the Ce-based oxide particle in the exhaust gas purifying catalyst composition is 1.0% by mass or more based on a mass of the exhaust gas purifying catalyst composition.

7. An exhaust gas purifying catalyst comprising a substrate and a catalyst layer provided on the substrate, wherein the catalyst layer is composed of the exhaust gas purifying catalyst composition according to any one of claims 1 to 6.

**FIG. 1**

**FIG. 2**

**FIG. 3**

FIG. 4

FIG. 5

## INTERNATIONAL SEARCH REPORT

| International application No. |
| --- |
| **PCT/JP2022/008674** |

**A. CLASSIFICATION OF SUBJECT MATTER**

***B01J 23/63***(2006.01)i; ***B01D 53/94***(2006.01)i; ***B01J 35/04***(2006.01)i; ***F01N 3/10***(2006.01)i; ***F01N 3/28***(2006.01)i
FI: B01J23/63 A ZAB; B01D53/94 222; B01D53/94 241; B01D53/94 245; B01D53/94 280; B01J35/04 301E; F01N3/10 A; F01N3/28 301P

According to International Patent Classification (IPC) or to both national classification and IPC

**B. FIELDS SEARCHED**

Minimum documentation searched (classification system followed by classification symbols)

B01J23/63; B01D53/94; B01J35/04; F01N3/10; F01N3/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-171971 A (CATALER CORP) 22 September 2014 (2014-09-22) claims 1-5, paragraphs [0015]-[0020], [0047]-[0048], [0051], [0056] | 1-7 |
| A | JP 2007-117848 A (MAZDA MOTOR CORP) 17 May 2007 (2007-05-17) claims 1-6, paragraphs [0045]-[0049] | 1-7 |
| A | JP 2017-189761 A (TOYOTA MOTOR CORP) 19 October 2017 (2017-10-19) claims 1-2, paragraph [0024] | 1-7 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 April 2022** | **17 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

Form PCT/ISA/210 (patent family annex) (January 2015)

**INTERNATIONAL SEARCH REPORT**
Information on patent family members

International application No.

**PCT/JP2022/008674**

| Patent document<br>cited in search report | | | Publication date<br>(day/month/year) | Patent family member(s) | Publication date<br>(day/month/year) |
|---|---|---|---|---|---|
| JP | 2014-171971 | A | 22 September 2014 | (Family: none) | |
| JP | 2007-117848 | A | 17 May 2007 | US 2007/0093381 A1<br>claims 1-7, paragraphs [0057]-[0058]<br>EP 1787709 A2 | |
| JP | 2017-189761 | A | 19 October 2017 | (Family: none) | |

**EP 4 316 654 A1**

## REFERENCES CITED IN THE DESCRIPTION

**Patent documents cited in the description**

- JP 2017039069 A
- JP 2006297372 A